# EUROPEAN PATENT SPECIFICATION

(11) **EP 1 264 385 B1**
(45) Date of publication and mention of the grant of the patent: **20.12.2006**
(21) Application number: 01911081.6
(22) Date of filing: 22.02.2001
(51) Int. Cl.: H02J 9/06, H02M 5/458

(54) **POWER CONVERTERS WITH AC AND DC OPERATING MODES AND METHODS OF OPERATION THEREOF**
STROMWANDLER MIT WECHSELSTROM- UND GLEICHSTROMBETRIEBSMODUS UND VERFAHREN ZUM BETRIEB DESSELBEN
CONVERTISSEURS DE PUISSANCE FONCTIONNANT EN CA ET CC ET PROCEDES D'EXPLOITATION ASSOCIES

(30) Priority: 29.02.2000 US 515138
(43) Date of publication of application: 11.12.2002
(73) Proprietor: Eaton Power Quality Corporation, Cleveland, Ohio 44114 (US)
(72) Inventor: JOHNSON, Robert, W., Jr., Raleigh, NC 27615 (US)
(74) Representative: Wagner & Geyer
(86) International application number: PCT/US2001/005594
(87) International publication number: WO 2001/065659

(56) References cited:
- EP-A- 0 420 628
- WO-A-94/23482
- US-A- 5 119 283
- US-A- 5 126 585
- US-A- 5 253 157
- US-A- 5 463 283
- US-A- 5 610 805
- PATENT ABSTRACTS OF JAPAN vol. 1998, no. 08, 30 June 1998 (1998-06-30) & JP 10 066351 A (MATSUSHITA ELECTRIC WORKS), 6 March 1998 (1998-03-06)
- PATENT ABSTRACTS OF JAPAN vol. 018, no. 023 (M-1541), 14 January 1994 (1994-01-14) & JP 05 260610 A (HINO MOTORS LTD), 8 October 1993 (1993-10-08)
- PATENT ABSTRACTS OF JAPAN vol. 1995, no. 05, 30 June 1995 (1995-06-30) & JP 07 046861 A (SANKEN ELECTRIC ), 14 February 1995 (1995-02-14)

## Description

### Field Of The Invention

The present invention relates to electrical power devices and methods of operation thereof, and more particularly, to power conversion devices and methods of operation thereof.

### Background Of The Invention

Uninterruptible power supplies (UPSs) are power conversion devices that are commonly used to provide conditioned, reliable power for computer networks, telecommunications networks, medical equipment and the like. UPSs are widely used with computers and similar computing devices, including but not limited to personal computers, workstations, mini computers, network servers, disk arrays and mainframe computers, to insure that valuable data is not lost and that the device can continue to operate notwithstanding temporary loss of an AC utility source. UPSs typically provide power to such electronic equipment from a secondary source, such as a battery, in the event that a primary alternating current (AC) utility source drops out (blackout) or fails to provide a proper voltage (brownout).

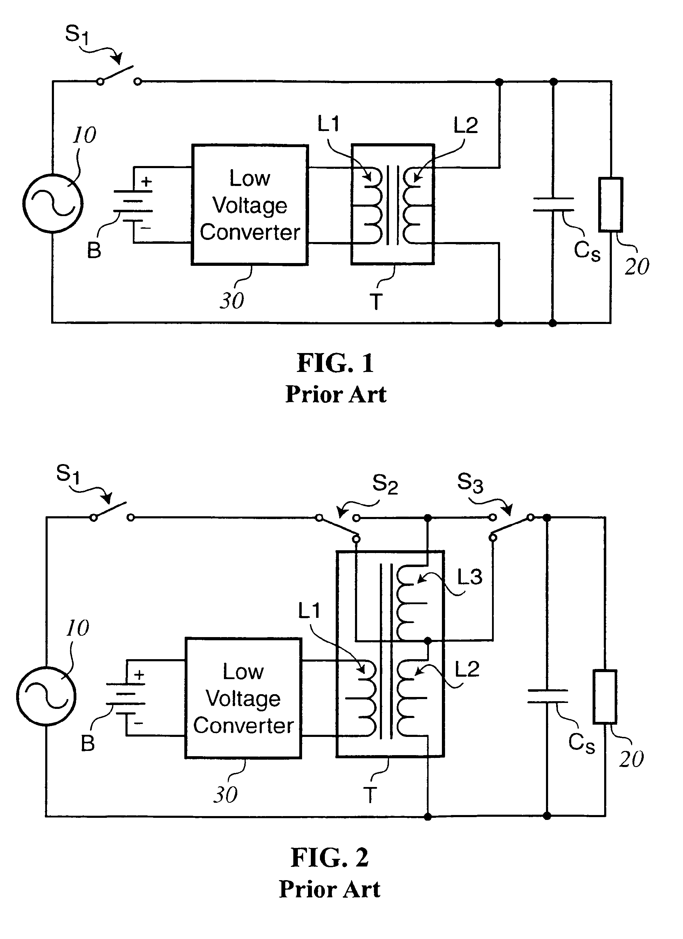

Conventional UPSs may be classified into categories. Referring to Fig. 1, a typical conventional off-line UPS disconnects a load from a primary AC source **10** when the primary AC source fails or is operating in a degraded manner, allowing the load to be served from a secondary source such as a battery. The AC power source **10** is connected in series with a switch **S₁,** producing an AC voltage across a load **20** when the switch **S₁** is closed. Energy storage is typically provided in the form of a storage capacitor **Cₛ**. The secondary power source, here a battery **B,** is connected to the load **20** via a low voltage converter **30** and a transformer **T**. When the AC power source **10** fails, the switch **S₁** is opened, causing the load to draw power from the battery **B.** The low voltage converter **30** typically is an inverter that produces a quasi-square wave or sine wave voltage on a first winding **L₁** of the transformer **T** from a DC voltage produced by the battery **B.** The first winding **L₁** is coupled to a second winding **L₂** of the transformer **T** connected across the load **20.** When the AC power source is operational, i.e., when the switch **S₁** is closed, the battery **B** may be charged using the low-voltage converter 30 or a separate battery charger circuit (not shown).

A line interactive (LIA) UPS topology is illustrated in Fig. 2. Here, the transformer **T** has a third winding **L₃** that may be connected in series with the load **20** using switches **S₂, S₃** to "buck" or "boost" the voltage applied to the load **20.** As with the offline UPS topology of Fig. 1, when the AC power source **10** fails, the switch **S₁** can be opened to allow the load **20** to run off the battery **B.**

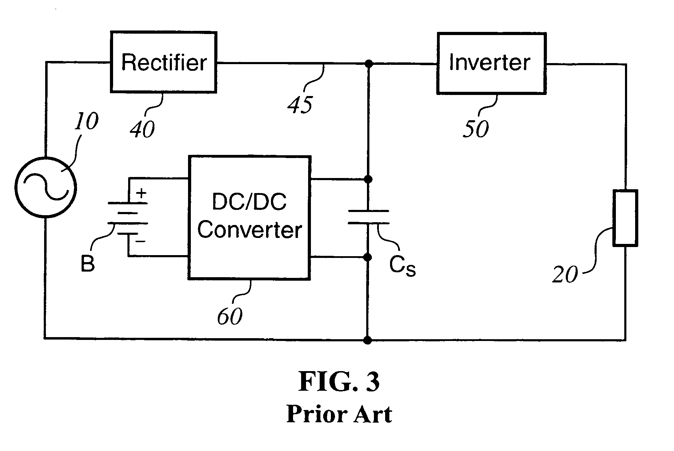

As illustrated in Fig. 3, a typical on-line UPS includes a rectifier **40** that receives an AC voltage from an AC power source **10**, producing a DC voltage across a storage capacitor **Cₛ** at an intermediate node **45.** An inverter **50** is connected between the intermediate node **45**, and is operative to produce an AC voltage across a load **20** from the DC voltage. As shown, a battery **B** is connected to the intermediate node **45** via a DC/DC converter **60,** supplying auxiliary power. Alternatively, the DC/DC converter can be eliminated and a high-voltage battery (not shown) connected directly to the intermediate node **45.**

US-A-5,126,585 discloses a power supply apparatus which can be configured as a power line filter or an uninterruptible power supply having a battery test on load capability. It comprises an input reversible rectifier connectable between an AC supply and a high voltage internal DC bus, a second reversible rectifier interconnecting storage batteries to the high voltage DC bus, and an output module supplying a desired DC output or an AC output. In use the voltage on the internal DC bus is maintained at a greater level than that of (a) the instantaneous repetitive peak of the incoming voltage, and (b) the peak battery storage voltage. Battery test means is provided by allowing the dumping of the charge stored within the storage batteries for a certain period at the maximum available rate into the internal bus and back into the AC supply through the said reversible rectifiers; meanwhile observing the extent of the battery voatage drop so caused.

US-A-5,253,157 discloses a half-bridge inverter circuit for converting a DC voltage source to an AC voltage waveform, and supplying the AC voltage waveform to a load. The half-bridge inverter includes an inverter comprising a first capacitor for supplying a positive output voltage and a second capacitor for supplying a negative output voltage during respective intervals of the output waveform. An equalizer, responsive to a control circuit, equalizes the voltage output from the first capacitor and the second capacitor in order to overcome non-symmetry of these voltages resulting from a non-symmetrical load.

Each of these topologies may have disadvantages. For example, typical conventional on-line and LIA UPSs for 60 Hz applications use 60 Hz magnetic components (e.g., transformers and inductors) that are sized for such frequencies, and thus may be large, heavy and expensive. LIA UPSs often exhibit step voltage changes that can affect the performance of the load. Conventional off-line, LIA and on-line UPSs often use large storage capacitors, which tend to be bulky and expensive, in order to maintain an acceptable output voltage under heavy loading conditions. Moreover, because conventional UPSs are typically designed to operate in only one of the above-described off-line, LIA or on-line modes, sellers of UPSs may be required to maintain large inventories including several different types of UPSs in order to meet a variety of different customer applications.

### Summary of the Invention

According to embodiments of the present invention, a power converter, such as one that might be utilized in an uninterruptible power supply (UPS) is provided as set forth in claim 1. Preferred embodiments of the power converter may be gathered from respective dependent claims.

According to method aspects of the present invention, a method of generating an AC output voltage at a load from a DC input voltage produced by a DC power source is provided as set forth in claim 16. Preferred embodiments of the method may be gathered from the respective dependent claims.

### Brief Description of the Drawings

FIGs. 1-3 are schematic diagrams of power conversion circuit topologies used in typical conventional uninterruptible power supplies (UPSs).
FIGs. 4-5 are schematic diagrams illustrating power converters according to embodiments of the present invention.
FIGs. 6-11 are schematic diagrams illustrating exemplary operational states of a power converter according to embodiments of the present invention.
FIGs. 12-13 are waveform diagrams illustrating exemplary DC-powered mode operations of a power converter according to embodiments of the present invention.
FIG. 14 is a schematic diagram illustrating exemplary charging mode operations of a power converter according to other embodiments of the present invention.
FIG. 15 is a waveform diagram illustrating exemplary charging mode operations for the embodiments of FIG. 14.
FIG. 16 is a schematic diagram illustrating a power converter according to other embodiments of the present invention.

### Detailed Description of Preferred Embodiments

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

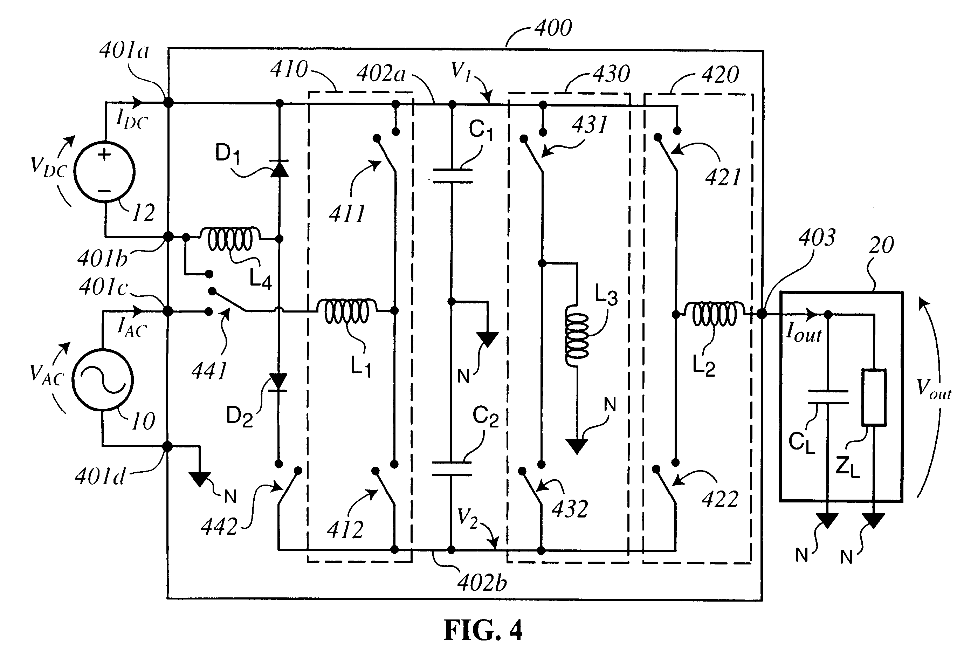

Fig. 4 is a schematic diagram illustrating a power converter **400** according to embodiments of the present invention, in particular, a power converter configured to operate as an uninterruptible power supply (UPS). The power converter **400** includes a first switching circuit **410,** a second switching circuit **420,** and a third switching circuit **430,** each of which is coupled to first and second voltage busses **402a, 402b.** First and second capacitors **C₁, C₂** are coupled to the first and second voltage busses **402a, 402b** to the neutral bus **N,** and provide energy storage. The first voltage bus **402a** is configured to connect to a DC power supply **12** at a first terminal **401** a of a first input port. The first switching circuit **410** includes first and second switches **411, 412** that selectively couple the DC power source **12** to the first and second power busses **402a, 402b** via a second terminal **401 b** of the first input port and a first inductor **L₁,** here shown as switchably connected to the second terminal **401b** of the first input port by a switch **441.** The second switching circuit **420** includes third and fourth switches **421, 422** that selectively couple the first and second voltage busses **402a, 402b,** respectively, to a load **20** at an output terminal **403** through a second inductor **L₂.** The third switching circuit **430** includes fifth and sixth switches **431, 432** that selectively couple the first and second voltage busses **402a, 402b**, respectively, to the neutral bus **N** through a third inductor **L₃.** Preferably, the switches of the switch pairs **411-412, 421-422, 431-432** of the first switching, second switching and third switching circuits 410, 420, 430 operate in a substantially complementary fashion.

The power converter **400** also includes first and second terminals **401c, 401d** of a second input port that is configured to connect to an AC power source **10.** The power converter **400** of the illustrated embodiment further includes a seventh switch **441** that switches the first inductor **L₁** between the DC power source **12** and the AC power source **10.** For the illustrated embodiment, the first voltage bus **402a** is configured to connect to the DC power source **12** at a first terminal thereof. As shown, the seventh switch **441** couples and decouples the AC power source **10** and a second terminal of the DC power source **12** to and from the first inductor **L₁** in a complementary fashion. Consequently, when the seventh switch **441** couples the AC source **10** to the inductor **L₁,** the power converter **400** operates in an AC-powered (e.g., "normal") mode and, when the seventh switch **441** couples the DC source **12** to the inductor **L₁,** the power converter **400** operates in a DC-powered (e.g., "emergency") mode. In the illustrated embodiment, the power converter **400** also includes an eighth switch **442** that is operative to couple and decouple the DC power source **12** and the second voltage bus **402b** through a fourth inductor **L₄**. The eighth switch **442** can be used to implement operations for charging the DC power source **12** (e.g., when the DC power source **12** is a battery), as described in further detail below.

In the AC-powered mode, the first switching circuit **410** can be operated as a rectifier, producing first and second DC voltages **V₁, V₂** on respective ones of the first and second voltage busses **402a, 402b** from an AC input voltage **V_{AC}.** As described in the United States Patent Application US 6,160,722 the first switching circuit **410** can boost the DC voltages **V₁, V₂** by controlling the modulation of the switches **411, 412.** The second switching circuit **420** can be operated as an inverter, inverting the DC voltages **V₁**, **V₂** to produce an AC output voltage **Vₒᵤₜ** at the load. Through low pass filtering effected by the second inductor **L₂** and the load capacitance **C_{L}**, the AC output voltage **Vₒᵤₜ** may be smoothed to produce an approximately sinusoidal waveform. The third switching circuit **430** can be operated as a "balancer," controlling the relative magnitudes of the first and second DC voltages **V₁, V₂** on the first and second voltage busses **402a, 402b** by controlling respective first and second rates (e.g., duty cycles) at which the neutral bus **N** is connected to respective ones of the first and second voltage busses **402a, 402b** through the third inductor **L₃**.

As used herein, a "balancer circuit" is a circuit that is capable of effecting a desired "balance" between voltages on different busses, such as the first and second voltage busses **402a, 402b** of Fig. 4. This capability can allow power converters according to embodiments of the present invention, among other things, to control DC current drawn from the AC power source **10,** to operate more efficiently, and/or to utilize smaller components, e.g., storage capacitors, than those used in many conventional devices.

In the DC-powered mode, the first switching, second switching and third switching circuits **410, 420, 430** can be operated in a different manner to produce the AC output voltage **Vₒᵤₜ** from a DC output voltage **V_{DC}** produced by the DC power source **12.** According to an aspect of the present invention, the combination of the first, second and third switching circuits **410, 420, 430** can be controlled such that reference for the terminal DC power source **12** connected at the input terminal **401b** is moved between the neutral bus **N** and the second voltage bus **402b** as the AC output voltage **Vₒᵤₜ** transitions between positive and negative half cycles during DC-powered operation. This can allow for the use of lower voltage-rated parts for the switching elements of the first, second and third switching circuits **410, 420, 430.**

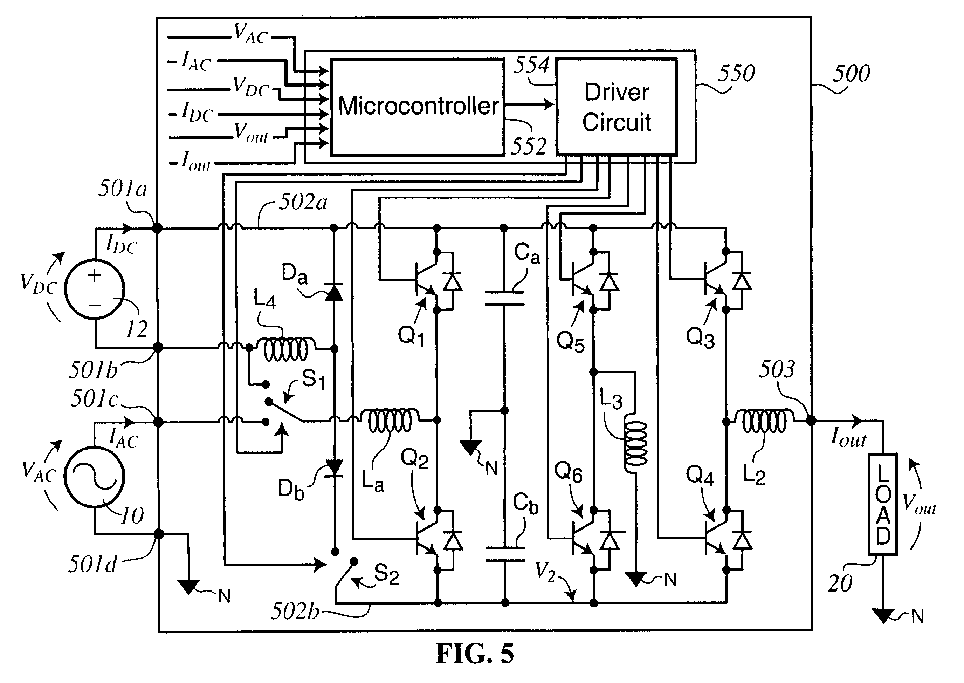

Fig. 5 illustrates a circuit implementation of a power converter **500** according to other embodiments of the present invention. The converter **500** includes a first, DC input port including first and second terminal **501a**, **501b** configured to connect to a DC power source **12,** and a second, AC input port including first and second terminals **501c, 501d** configured to connect to an AC power source. A first switch **S₁** (e.g., a relay) is operative to switch a first inductor **Lₐ** between terminals **501b, 501c,** under control of a switch control circuit **550** that includes a microcontroller **552** and a driver circuit **554.** Respective first and second capacitors **Cₐ, C_{b}** couple respective ones of the first and second voltage busses **502a, 502b** to a neutral bus **N.** Diode protected transistor switches **Q₁, Q₂** selectively couple the first inductor **Lₐ** to the first and second voltage busses **502a, 502b,** also under control of the switch control circuit **550.** Diode-protected transistors **Q₃, Q₄** selectively couple an output terminal **503** to the first and second voltage busses **502a, 502b** through a second inductor **L_{b}** under control of the switch control circuit **550**. Fifth and sixth diode-protected transistors **Q₅, Q₆** selectively couple the first and second voltage busses **502a, 502b** to the neutral bus **N** through a third inductor **L₃,** also under control of the switch control circuit **550.** A second switch **S₂** (e.g., an insulated gate bipolar transistor **(IGBT),** field effect transistor (FET) or other switching device) is operative to couple and decouple the second voltage bus **502b** and the input terminal **501b** at which the DC power source **12** is connected. Diodes **Dₐ, D_{b}** provide current direction control between first and second voltage busses **502a, 502b** and the input terminal **501b.**

The switch control circuit **540** may control the transistors **Q₁, Q₂, Q₃, Q₄, Q₅, Q₆** and the switches **S₁, S₂** responsive to several operational variables including, but not limited to, the AC input voltage **V_{AC}** at the terminals **501c, 501d** of the AC input port, the DC input voltage **V_{DC}** at the terminals **501a, 501b** of the DC input port, the AC output voltage **Vₒᵤₜ** at the output terminal **503,** the AC current **I_{AC}** at the input terminals **501c, 501d** of the AC input port, the DC current **I_{DC}** at the input terminals **501a, 501b** of the DC input port, and the AC current **I_{OUT}** at the output terminal **503.** The switch control circuit **550** may operate using different types of control techniques including, but not limited to, "open loop" control techniques in which the operations of the transistors **Q₁, Q₂, Q₃, Q₄, Q₅, Q₆** are controlled based on the **AC** input voltage **V_{AC},** without reference to the output voltage **Vₒᵤₜ** produced by the converter **550.** The switch control circuit **550** may also operate using "closed loop" techniques in which the AC output voltage **Vₒᵤₜ** is sensed and used to guide control of the operations of the transistors **Q₁**, **Q₂**, **Q₃**, **Q₄**, **Q₅**, **Q₆**. The AC input voltage **V_{AC},** the DC input voltage **V_{DC},** the AC output voltage **Vₒᵤₜ**, the AC current **I_{AC},** the DC current **I_{DC}**, the AC current **Iₒᵤₜ** and other operational variables may be provided to the switch control circuit 550 in a number of different forms including, but not limited to, analog or digital representations of these voltages and currents or quantities related to and/or derived from these voltages and currents.

It will be appreciated that the embodiment of Fig. 5 represents an exemplary implementation, and that other circuit implementations fall within the scope of the present invention. For example, the switching functions of the transistors **Q₁, Q₂, Q₃, Q₄, Q₅, Q₆** may be provided by a variety of switching devices including, but not limited to, bipolar transistors, field-effect transistors (FETs), metal oxide semiconductor FETs (MOSFETs), gate turn-on devices (GTOs), and the like. The driver circuit **554** may include variety of different components as well, and preferably includes components suitable for controlling the particular type(s) of switching devices used.

Other functions of the switching control circuit **550** may be implemented in a number of different ways within the scope of the present invention. For example, functions of the microcontroller **552** may be implemented using discrete logic circuits or programmable logic circuits such as programmable logic devices (PLDs) instead or in conjunction with a microcontroller, microprocessor or similar device. Functions of the microcontroller **552** and the driver circuit **554** may also be combined in one or more devices, such as an application-specific integrated circuit (ASIC) or a hybrid microcircuit.

It will be appreciated that configurations that are complementary or "mirror images" with respect to the configurations of the embodiments of FIGs. 4 and 5 and also fall within the scope of the present invention. For example, rather than fixedly connecting the positive terminal of the DC power source **12** to the first voltage bus **402a** and switchably connecting the negative terminal of the DC power source **12** to the first switching circuit **410** as shown in FIG. 4, the negative terminal of the DC power source **12** can be fixedly connected to the second voltage bus **402b** and the positive terminal of the DC power source **12** switchably connected to the first switching circuit **410.**

The following discussion describes various operational modes of power converters according to embodiments of the present invention. In particular, operation of a power converter, such as the power converters **400, 500** of FIGs. 4 and 5, will be described in terms of the operation of switching elements, such as the switches **411, 412, 421, 422, 431, 432** of the first switching, second switching and third switching circuits **410, 420, 430** of the power converter **400.** More particularly, operations of power converters will be described in terms of "duty cycles" at which the switching elements are switched (modulated).

As used herein, "duty cycle" generally refers to a percentage of time during a switching cycle period (corresponding to the switching frequency described above) that a switch is in a "closed," i.e., conductive, state. Thus, for example, a switch that is maintained at a 50% duty cycle is intermittently "on" for half of a switching cycle, while a switch approaching a 100% duty cycle, e.g., a 99% duty cycle, is on for nearly all of the switching cycle. It will be understood that, as described herein, the switches discussed may also operate at a 100% duty cycle, i.e., be maintained in an "on" state throughout one or more switching cycles, or at a 0% duty cycle, i.e., be maintained in an "off" state throughout one or more switching cycles.

It will be appreciated that this duty cycle control may be achieved, for example, by application of appropriate control signals to appropriate switching components. For example, referring to the embodiment of Fig. 5, duty cycle control of the switching transistors **Q₁, Q₂, Q₃, Q₄, Q₅, Q₆** may be achieved by the microcontroller **552** and driver circuit **554** applying appropriate base drive signals to the switching transistors **Q₁, Q₂, Q₃, Q₄, Q₅, Q₆.** It will be understood, however, that such duty cycle control may be achieved using any of a number of other switching devices and control signal generating circuits.

Preferably, each of the first, second, third, fourth, fifth and sixth switches **411, 412, 421, 422, 431, 432** ofFIGs. 4 and 6-11, 14 and 16 (and corresponding switching elements of FIG. 5) are operated at one or more switching frequencies that are relatively high with respect to the frequency of the AC output voltage **Vₒᵤₜ** produced by the converter, and more preferably, at one or more switching frequencies that each are at least 10 times higher than the frequency of the AC output voltage **Vₒᵤₜ.** Using relatively high switching frequencies allows the magnetic components (e.g., the inductors **L₁, L₂, L₃)** to be relatively small in size. It will be appreciated that although different switching frequencies can be used among the switches **411, 412, 421, 422, 431, 432,** a common switching frequency also may be used.

Preferably, each of the switch pairs comprising first and second switches **411, 412,** the third and fourth switches **421, 422,** and the fifth and sixth switches **431, 432,** (and corresponding switching transistor pairs in the embodiment of FIG. 5) are operated in a complementary fashion. Thus, for example, the second switch **412** of FIG. 4 is preferably generally constrained to be "off" when the first switch **411** is "on," and vice versa. However, it will be appreciated that, generally, practical circuit implementations within the scope of the present invention may be used in which the complementary switches are operated in an approximately or substantially complementary fashion. For example, a switch pair may be operated in a "break before make" fashion, such that one of the switches in the pair is turned off slightly before the other switch in the pair is turned on. In other circuit implementations, a slight amount of overlap of "on" periods of switches of a complementary pair may be allowed, e.g., a "make before break" mode of operation. Techniques for providing such "make before break" and "break before make" operations are known to those of skill in the art, and will not be discussed in greater detail herein.

### AC-Powered Operation

Referring again to FIG. 4, AC powered operation of the converter **400** may be achieved by coupling the AC power source 10 to the inductor **L₁** via the seventh switch **441.** In such a mode, the first switching circuit **410** may be operated as a variable-boost rectifier, generating respective positive and negative DC voltages **V1, V2** on the first and second voltage busses **402a, 402b.** The second switching circuit **420** may be operated as a variable-buck inverter, generating the AC output voltage **Vₒᵤₜ** from the DC voltages **V₁, V₂** at the first and second voltage busses **402a, 402b.** The third switching circuit **430** can be operated as a "balancer," constraining the first and second DC voltage **V₁, V₂** to have particular relative magnitudes, which may be equal or unequal. Exemplary AC-powered operations along the above-described line are described in the aforementioned United States Patent Application US 6,160,722.

Under certain conditions, operations of the first and second switching circuits **410, 420** can lead to the production of a DC component in the AC input current **I_{AC}** at the AC power source **10,** which is generally undesirable and, in some cases, prohibited by utility standards. According to an aspect of the present invention, the third switching circuit **430** can be used to control and, therefore reduce this DC component. For example, if respective voltages **V**₁, **V**₂ produced on the first and second voltage busses **402a, 402b** for respective half cycles of the AC input voltage **V_{AC}** are not symmetric due to, for example, component and/or load variation, a DC component may be produced in the AC input current **I_{AC}** at the AC power source **10.** This DC current component can be reduced by controlling the third switching circuit **430** responsive to the AC input current **I_{AC}** and more particularly, by sensing the DC current component in the AC input current **I_{AC}** and adjusting the duty cycles of the fifth and sixth switches **431, 432** accordingly. Such control may be implemented, for example, by modulating the fifth and sixth switches **431, 432** of the third switching circuit **430** responsive to a sensed DC component in the AC input current **I_{AC}** (for example, as determined by the microcontroller **552** of FIG. 5) using feedback control techniques. Feedback control techniques are well-known to those skilled in the art, and will not be described in greater detail.

### DC-Powered Operation

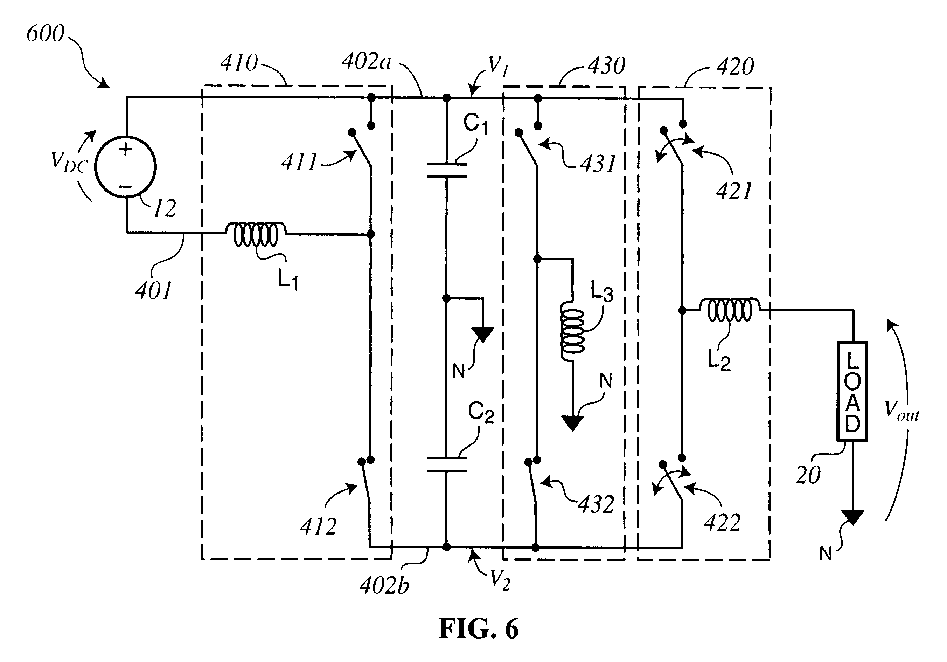

FIGs. 6-11 are schematic diagrams illustrating various operational states of a power converter **600** while the converter **600** is operating in a DC-powered (e.g., battery-powered) mode according to embodiments of the present invention. In particular, the power converter **600** of FIGs. 6-11 includes portions of the converter **400** of FIG. 4 with the DC source **12** shown connected between the first voltage bus **402a** and the inductor **L₁,** and with the switches **441, 442,** diodes **D₁, D₂,** and the inductor **L₄** removed for purposes of clarity of illustration.

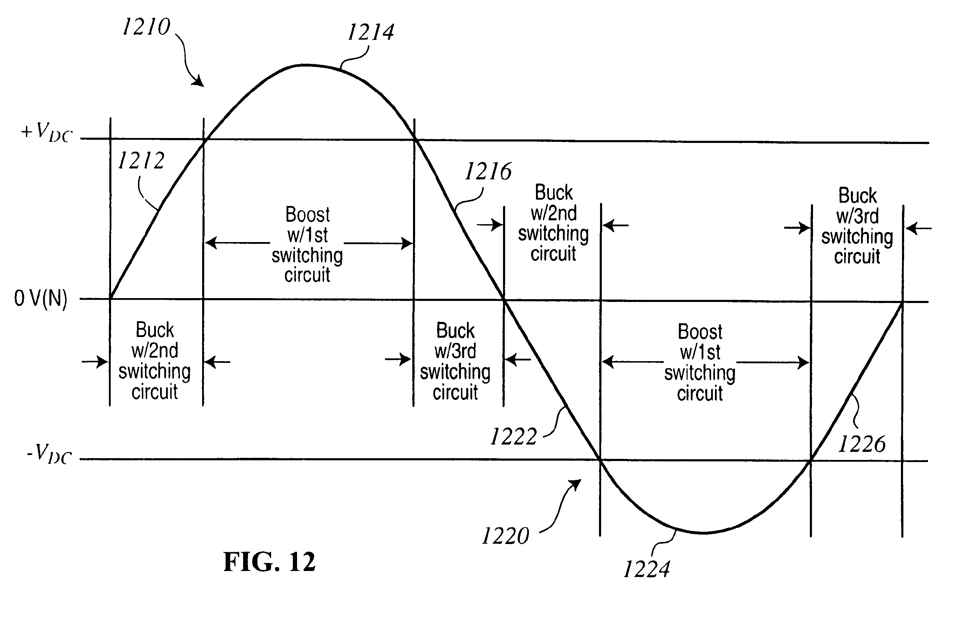

FIGs. 6 and 12 illustrate exemplary operations to produce a first portion **1212** of a first half-cycle **1210** of the AC output voltage **Vₒᵤₜ** from a **DC** input voltage **V_{DC}** produced by a **DC** power source **12** (e.g., a battery), where the first portion **1212** represents a portion of the first half-cycle **1210** in which the **AC** output voltage **Vₒᵤₜ** has a magnitude that is less than the DC input voltage **V_{DC}.** During the first portion **1212** of the first half cycle **1210,** the second switch **412** (from the first switching circuit **410)** and the sixth switch **432** (from the third switching circuit **430)** are "closed" (i.e., are operated at or near 100% duty cycle), while the first switch **411** (from the first switching circuit **410)** and the fifth switch **431** remain "open" (i.e., are operated at or near 0% duty cycle). This effectively references the negative terminal of the DC power source **12** to neutral bus **N.**

The third and fourth switches **421, 422** (from the second switching circuit **420**) are variably modulated in a complementary fashion to produce the desired magnitude in the AC output voltage **Vₒᵤₜ.** For example, when the desired AC output voltage **Vₒᵤₜ** is significantly less than the DC input voltage **V_{DC},** the third switch **421** can be modulated at a relatively low duty cycle, e.g., 10%, while the fourth switch **422** is operated at a relative high complementary duty cycle, e.g., 90%, thus bucking the voltage **V₁** on the first voltage bus **402a** to produce the desired magnitude in the AC output voltage **Vₒᵤₜ.** As the AC output voltage **Vₒᵤₜ** approaches the DC input voltage **V_{DC},** the duty cycles of the third and fourth switches **421, 422** are increased and decreased, respectively, thus reducing the amount of buck applied. The modulation applied may, for example, be controlled based on a difference between the actual AC output voltage **V_{AC}** and a desired (reference) voltage waveform, using feedback control techniques that may include, for example, compensation for loop characteristics (e.g., poles and/or zeroes) associated with the converter **600** and/or the load **20.** Feedback control techniques are known to those skilled in the art, and will not be discussed in greater detail herein. It will be appreciated that the appropriate control for the third and fourth switches **421, 422** is generally dependent on the values of circuit components, such as the second inductor **L₂,** as well as on the nature of the load **20** and the DC power source **12,** such as the value of the DC input voltage **V_{DC}** produced by the DC power source **12.**

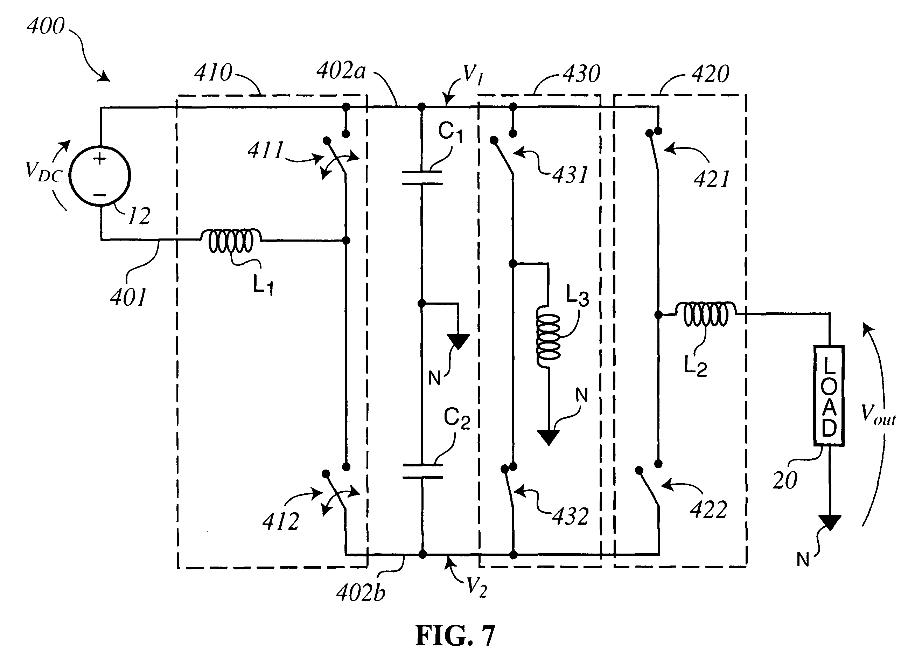

Referring now to FIGs. 7 and 12, when the desired AC output voltage **Vₒᵤₜ** exceeds the DC input voltage **V_{DC},** the converter **600** goes into a "boost" phase. The third and sixth switches **421, 432** are closed (i.e., are operated at or near 100% duty cycle) and the fourth and fifth switches **422, 431** remain open (i.e., are operated at or near 0% duty cycle), while the first and second switches **411, 412** are variably modulated in a complementary fashion to produce a second portion **1214** of the first cycle **1210** of the AC output voltage **Vₒᵤₜ.** The action of the first and second switches **411, 412** boosts the voltage **V₁** on the first voltage bus **402a** with respect to the neutral bus **N,** raising the AC output voltage **Vₒᵤₜ** above the DC input voltage **V_{DC}.** For example, when the desired AC output voltage **Vₒᵤₜ** is relatively near the DC input voltage **V_{DC},** the first switch **411** can be operated at a relatively high duty cycle (e.g., nearing 100%), while the second switch **412** is operated at a complementarily low duty cycle (e.g., approaching 0%). As the desired AC output voltage **Vₒᵤₜ** increases, the duty cycle of the first switch **411** is lowered while the duty cycle of the second switch **412** is increased. Energy stored in the first inductor **L₁** during "on" phases of the second switch **412** boosts the voltage **V₁** at the first voltage bus **402a,** thus increasing the AC output voltage **Vₒᵤₜ.** After the desired AC output voltage **Vₒᵤₜ** peaks, the duty cycles of the first and second switches **411, 412** increase and decrease, respectively, allowing the voltage **V₁** at the first voltage bus **402a** to fall, and thus lower the AC output voltage **Vₒᵤₜ.** The modulation applied to control the AC output voltage **Vₒᵤₜ** may, for example, be determined based on a difference between the actual AC output voltage **Vₒᵤₜ** and a desired (reference) voltage waveform, using feedback control techniques. It will be appreciated that appropriate control of the first and second switches **411, 412** is generally dependent on the values of circuit components, such as the first inductor **L₁,** as well as on the nature of the load **20** and the DC power source **12.**

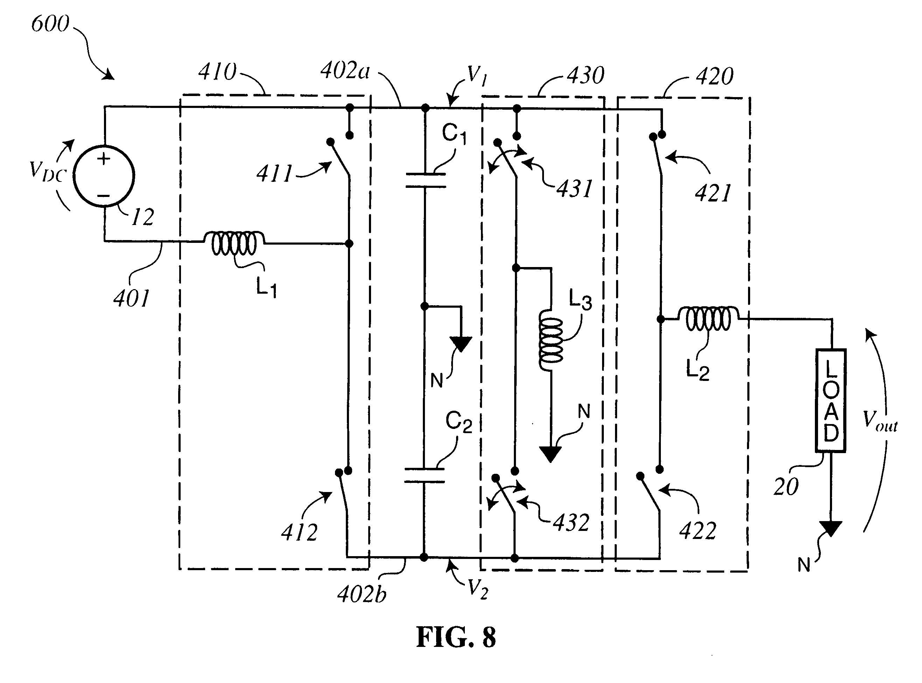

When the desired AC output voltage **Vₒᵤₜ** again falls below the DC input voltage **V_{DC}** for a third portion **1216** of the first half cycle, the converter **600** goes into another buck phase. However, as shown in FIG. 8, in contrast to the first buck phase, the fifth and sixth switches **431, 432** (i.e., the third switching circuit) are modulated to buck the voltage **V₁** at the first voltage bus **402a** and produce the third portion **1216** of the first half cycle **1210.** The modulation applied may, for example, be determined based on a difference between the actual AC output voltage **Vₒᵤₜ** and a desired (reference) voltage waveform, using feedback control techniques. It will be appreciated that appropriate control of the fifth and sixth switches **431, 432** is generally dependent on the values of circuit components of the converter **600,** such as the third inductor **L₂,** as well as on the nature of the load **20** and the DC power source **12.** For the third portion **1216** of the first half cycle **1210,** the second and third switches **412, 421** remain closed (i.e., are operated at or near 100% duty cycle), while the first and fourth switches **422** remain open (i.e., are operated at or near 0% duty cycle). As the desired AC output voltage **Vₒᵤₜ** approaches zero (i.e., the level of the neutral bus) from the positive direction, the duty cycles of the fifth and sixth switches **431, 432** approach 100% and 0%, respectively.

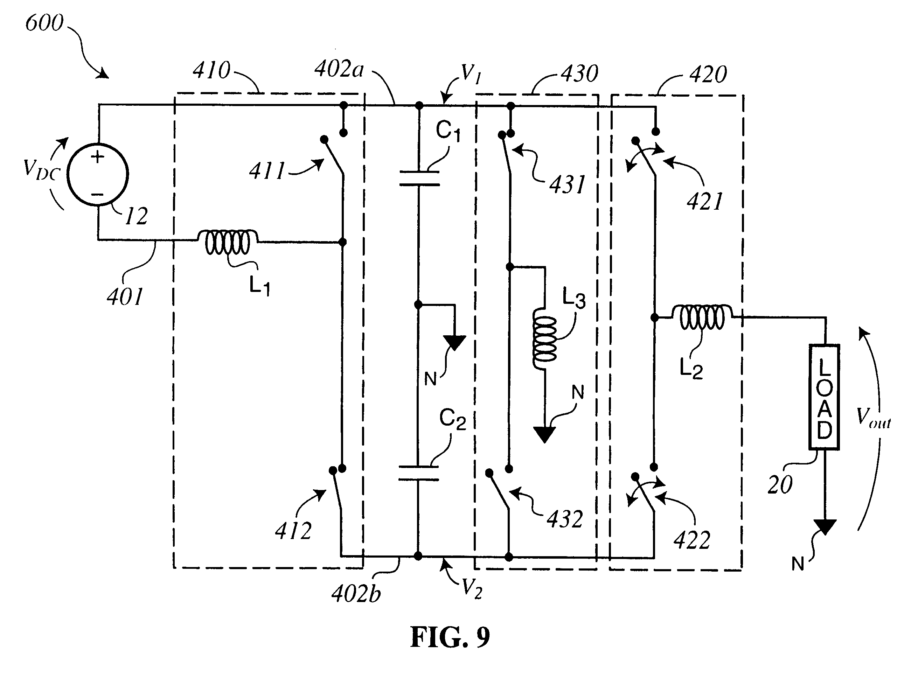

This segues into operations for producing a first portion **1222** of a second, negative half cycle **1220** of the AC output voltage **Vₒᵤₜ.** Referring to FIGs. 9 and 12, to produce the first portion **1222** of the second half-cycle **1220,** the second and fifth switches **412, 431** are maintained in a closed state, while the first and sixth switches **411, 432** remain open. In this manner, the DC power source **12** has its positive terminal referenced to the neutral bus **N** and its negative terminal tied to the second voltage bus **402b,** providing a "negative" DC source for driving the second voltage bus **402b.** During the first portion **1222** of the second half cycle **1220,** the third and fourth switches **421, 422** are variably modulated in a complementary fashion at appropriate duty cycles to buck the voltage **V₂** on the second voltage bus **402b** and produce a desired AC output voltage **Vₒᵤₜ** having a magnitude less than that of the DC input voltage **V_{DC}.** The modulation applied may, for example, be determined based on a difference between the actual AC output voltage **Vₒᵤₜ** and a desired (reference) voltage waveform, using feedback control techniques. It will be appreciated that appropriate control for the third and fourth switches **421, 422** is generally dependent on the values of circuit components of the converter **600,** such as the second inductor **L₂,** as well as on the nature of the load **20** and the DC power source **12.**

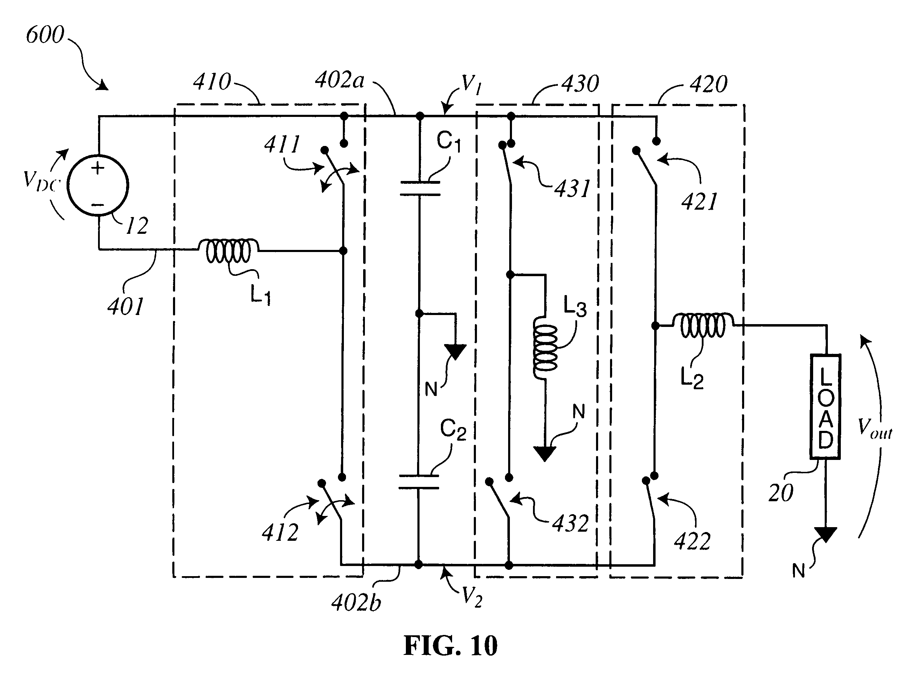

This operational phase continues until the magnitude of the desired AC output voltage **Vₒᵤₜ** exceeds the magnitude of the DC input voltage **V_{DC}.** Referring to FIGs. 10 and 12, in this operational phase, the fourth and fifth switches **422, 431** are closed (i.e., are operated at or near 100% duty cycle), while the third and sixth switches **421, 432** are left open (i.e., are operated at or near 0% duty cycle). The first and second switches **411, 412** are variably modulated at appropriate complementary duty cycles to boost the magnitude of the voltage **V₂** at the second voltage bus **402b** above the magnitude of the DC input voltage **V_{DC}** (i.e., to make the voltage **V₂** more negative than the negative terminal of the DC power source **12** with respect to the neutral bus **N)** and thus produce a second portion **1224** of the second half cycle **1220.** The modulation applied may, for example, be determined based on a difference between the actual AC output voltage **Vₒᵤₜ.** It will be appreciated that appropriate control of the first and second switches **421, 422** is generally dependent on the values of circuit components of the converter **600,** such as the first inductor **L₂,** as well as on the nature of the load **20** and the DC power source **12.**

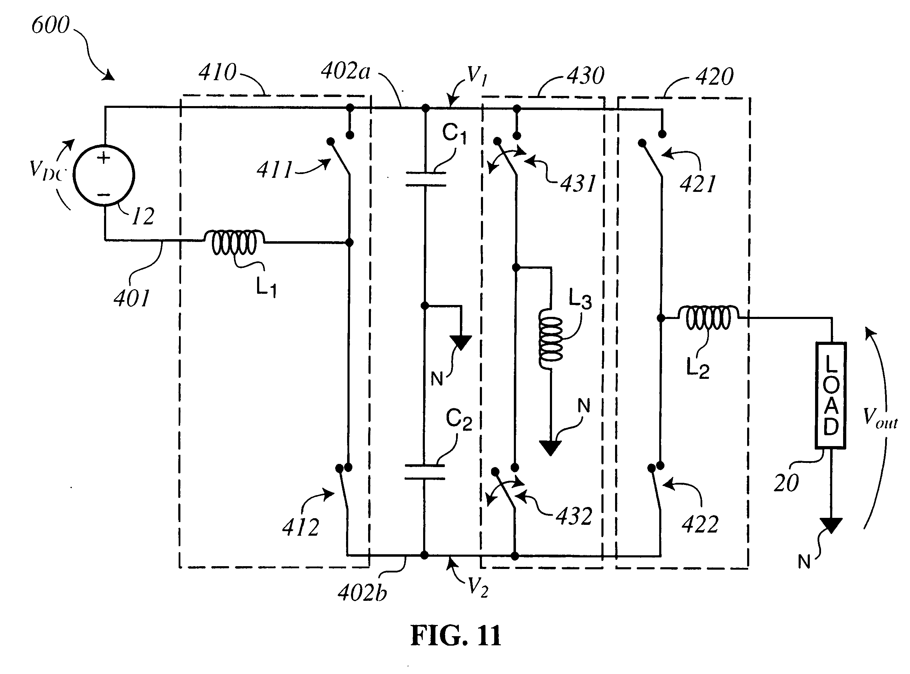

Referring now to FIGs. 11 and 12, to produce third portion **1226** of the second half cycle **1220** for which the magnitude of the desired AC output voltage **Vₒᵤₜ** is less than the magnitude of the DC input voltage **V_{DC},** the converter **600** goes into another buck phase. The second and fourth switches **412, 422** are closed (i.e., are operated at or near 100% duty cycle) and the first and third switches **411, 421** are open (i.e., are operated at or near 0% duty cycle) while the fifth and sixth switches **431, 432** are variably modulated at appropriate complementary duty cycles to buck the voltage **V₂** at the second voltage bus **402b** and produce the desired AC output voltage **Vₒᵤₜ**. The modulation applied may, for example, be determined based on a difference between the actual AC output voltage **Vₒᵤₜ** and a desired (reference) voltage waveform, using feedback control techniques. It will be appreciated that appropriate control of the fifth and sixth switches **431, 432** is generally dependent on the values of circuit components, such as the third inductor **L₃,** as well as on the nature of the load **20** and the DC power source **12.** As the desired AC output voltage **Vout** approaches zero from the negative direction, the duty cycles of the fifth and sixth switches **431, 432** approach 0% and 100%, respectively, returning the negative terminal of the DC power source **12** to a neutral reference and segueing into operations for producing a next, positive half cycle, as described above.

It will be understood that the above sequence of operations can be varied within the scope of the present invention. In other embodiments of the present invention, a different sequence of the operational states illustrated in FIGs. 6, 7, 10, 11 and 13 may be used to generate an AC output voltage.

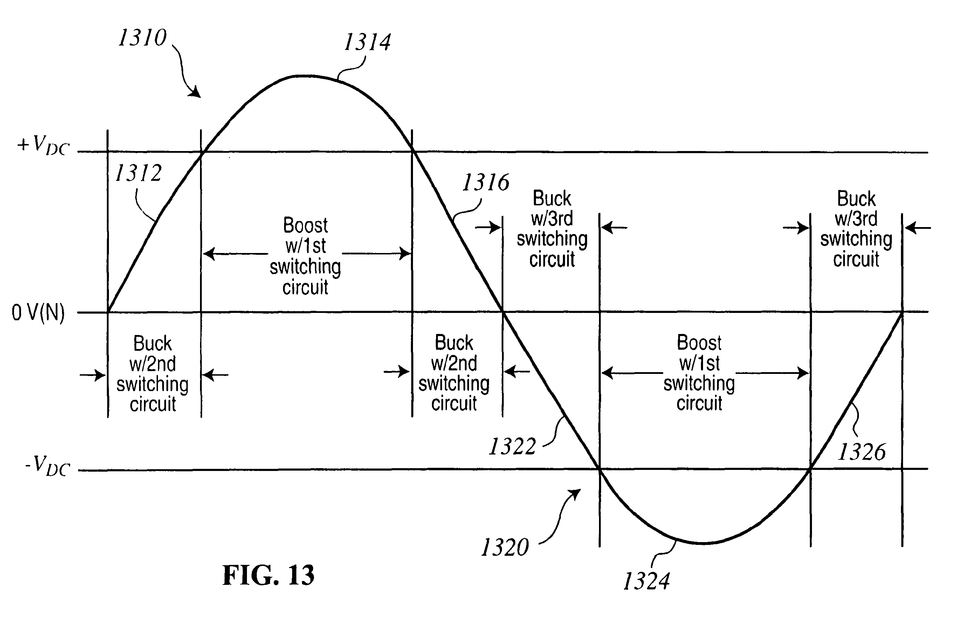

FIGs. 6 and 13 illustrate operations to produce a first portion **1312** of a first half-cycle **1310** of the AC output voltage **Vₒᵤₜ** from a DC input voltage **V_{DC}** produced by a DC power source **12** (e.g., a battery), where the first portion **1312** represents a portion of the first half-cycle **1310** in which the **AC** output voltage **Vₒᵤₜ** has a magnitude that is less than the DC input voltage **V_{DC}.** During the first portion **1312** of the first half cycle **1310,** the second switch **412** (from the first switching circuit **410)** and the sixth switch **432** (from the third switching circuit **430)** are "closed" (i.e., are operated at or near 100% duty cycle), while the first switch **411** (from the first switching circuit **410)** and the fifth switch **431** remain "open" (i.e., are operated at or near 0% duty cycle). This effectively references the negative terminal of the DC power source **12** to neutral bus **N.**

The third and fourth switches **421, 422** (from the second switching circuit **420**) are variably modulated in a complementary fashion to produce the desired magnitude in the AC output voltage **Vₒᵤₜ.** For example, when the desired AC output voltage **Vₒᵤₜ** is significantly less than the DC input voltage **V_{DC},** the third switch **421** can be modulated at a relatively low duty cycle, e.g., 10%, while the fourth switch **422** is operated at a relative high complementary duty cycle, e.g., 90%, thus bucking the voltage **V₁** on the first voltage bus **402a** to produce the desired magnitude in the AC output voltage **Vₒᵤₜ.** As the AC output voltage **Vₒᵤₜ** approaches the DC input voltage **V_{DC},** the duty cycles of the third and fourth switches **421, 422** are increased and decreased, respectively, thus reducing the amount of buck applied. The modulation applied may, for example, be controlled based on a difference between the actual AC output voltage **V_{AC}** and a desired (reference) voltage waveform, using feedback control techniques that may include, for example, compensation for loop characteristics (e.g., poles and/or zeroes) associated with the converter **600** and/or the load **20.** Feedback control techniques are known to those skilled in the art, and will not be discussed in greater detail herein. It will be appreciated that the appropriate control for the third and fourth switches **421, 422** is generally dependent on the values of circuit components, such as the second inductor **L₂,** as well as on the nature of the load **20** and the DC power source **12,** such as the value of the DC input voltage **V_{DC}** produced by the DC power source **12.**

Referring now to FIGs. 7 and 13, when the desired AC output voltage **Vₒᵤₜ** exceeds the DC input voltage **V_{DC},** the converter **600** goes into a "boost" phase. The third and sixth switches **421, 432** are closed (i.e., are operated at or near 100% duty cycle) and the fourth and fifth switches **422, 431** remain open (i.e., are operated at or near 0% duty cycle), while the first and second switches **411, 412** are variably modulated in a complementary fashion to produce a second portion **1314** of the first cycle **1310** of the AC output voltage **Vₒᵤₜ.** The action of the first and second switches **411, 412** boosts the voltage **V₁** on the first voltage bus **402a** with respect to the neutral bus **N,** raising the AC output voltage **Vₒᵤₜ** above the DC input voltage **V_{DC}**. For example, when the desired AC output voltage **Vₒᵤₜ** is relatively near the DC input voltage **V_{DC},** the first switch **411** can be operated at a relatively high duty cycle (e.g., nearing 100%), while the second switch **412** is operated at a complementarily low duty cycle (e.g., approaching 0%). As the desired AC output voltage **Vₒᵤₜ** increases, the duty cycle of the first switch **411** is lowered while the duty cycle of the second switch **412** is increased. Energy stored in the first inductor **L₁** during "on" phases of the second switch **412** boosts the voltage **V₁** at the first voltage bus **402a,** thus increasing the AC output voltage **Vₒᵤₜ.** After the desired AC output voltage **Vₒᵤₜ** peaks, the duty cycles of the first and second switches **411, 412** increase and decrease, respectively, allowing the voltage **V₁** at the first voltage bus **402a** to fall, and thus lower the AC output voltage **Vₒᵤₜ.** The modulation applied to control the AC output voltage **Vₒᵤₜ** may, for example, be determined based on a difference between the actual AC output voltage **Vₒᵤₜ** and a desired (reference) voltage waveform, using feedback control techniques. It will be appreciated that appropriate control of the first and second switches **411, 412** is generally dependent on the values of circuit components, such as the first inductor **L₁,** as well as on the nature of the load 20 and the DC power source **12.**

When the desired AC output voltage **Vₒᵤₜ** again falls below the DC input voltage **V_{DC}** for a third portion **1316** of the first half cycle **1310,** the converter **600** reverts to the first buck mode of operation illustrated in FIG. 6. The second switch **412** and the sixth switch **432** are "closed" (i.e., are operated at or near 100% duty cycle), while the first switch **411** and the fifth switch **431** remain "open" (i.e., are operated at or near 0% duty cycle). The third and fourth switches **421, 422** are variably modulated in a complementary fashion to produce the desired magnitude in the AC output voltage **Vₒᵤₜ.** For example, when the desired AC output voltage **Vₒᵤₜ** is relatively near the DC input voltage **V_{DC},** the third switch **421** can be modulated at a relatively high duty cycle, e.g., 90%, while the fourth switch **422** is operated at a relative low complementary duty cycle, e.g., 10%, thus slightly bucking the voltage **V₁** on the first voltage bus **402a** to produce the desired magnitude in the AC output voltage **Vₒᵤₜ.** As the AC output voltage **Vₒᵤₜ** approaches the level of the neutral bus (0 V), the duty cycles of the third and fourth switches **421, 422** are decreased and increased, respectively, thus increasing the amount of buck applied. The modulation applied may, for example, be controlled based on a difference between the actual AC output voltage **V_{AC}** and a desired (reference) voltage waveform, using feedback control techniques that may include, for example, compensation for loop characteristics (e.g., poles and/or zeroes) associated with the converter **600** and/or the load **20.** Feedback control techniques are known to those skilled in the art, and will not be discussed in greater detail herein. It will be appreciated that the appropriate control for the third and fourth switches **421, 422** is generally dependent on the values of circuit components, such as the second inductor **L₂,** as well as on the nature of the load **20** and the DC power source **12,** such as the value of the DC input voltage **V_{DC}** produced by the DC power source **12.** As the desired AC output voltage **Vₒᵤₜ** approaches zero (i.e., the level of the neutral bus) from the positive direction, the duty cycles of the third and fourth switches **421, 422** approach 0% and 100%, respectively.

This segues into operations for producing a first portion **1322** of a second, negative half cycle **1320** of the AC output voltage **Vₒᵤₜ.** Referring to FIGs. 11 and 13, to produce the first portion **1322** of the second half cycle **1320** for which the magnitude of the desired AC output voltage **Vₒᵤₜ** is less than the magnitude of the DC input voltage **V_{DC},** the converter **600** goes into another buck phase. The second and fourth switches **412, 422** are closed (i.e., are operated at or near 100% duty cycle) and the first and third switches **411, 421** are open (i.e., are operated at or near 0% duty cycle) while the fifth and sixth switches **431, 432** are variably modulated at appropriate complementary duty cycles to buck the voltage **V₂** at the second voltage bus **402b** and produce the desired AC output voltage **Vₒᵤₜ.** The modulation applied may, for example, be determined based on a difference between the actual AC output voltage **Vₒᵤₜ** and a desired (reference) voltage waveform, using feedback control techniques. It will be appreciated that appropriate control of the fifth and sixth switches **431, 432** is generally dependent on the values of circuit components, such as the third inductor **L₃,** as well as on the nature of the load **20** and the DC power source **12.**

This operational phase continues until the magnitude of the desired AC output voltage **Vₒᵤₜ** exceeds the magnitude of the DC input voltage **V_{DC}.** Referring to FIGs. 10 and 13, in this operational phase, the fourth and fifth switches **422, 431** are closed (i.e., are operated at or near 100% duty cycle), while the third and sixth switches **421, 432** are left open (i.e., are operated at or near 0% duty cycle). The first and second switches **411,412** are variably modulated at appropriate complementary duty cycles to boost the magnitude of the voltage **V₂** at the second voltage bus **402b** above the magnitude of the DC input voltage **V_{DC}** (i.e., to make the voltage **V₂** more negative than the negative terminal of the DC power source **12** with respect to the neutral bus **N**) and thus produce a second portion **1324** of the second half cycle **1320.** The modulation applied may, for example, be determined based on a difference between the actual AC output voltage **Vₒᵤₜ.** It will be appreciated that appropriate control of the first and second switches **421, 422** is generally dependent on the values of circuit components of the converter **600,** such as the first inductor **L₂,** as well as on the nature of the load **20** and the DC power source **12.**

Referring now to FIGs. 11 and 13, to produce third portion **1326** of the second half cycle **1320** for which the magnitude of the desired AC output voltage **Vₒᵤₜ** is less than the magnitude of the DC input voltage **V_{DC},** the converter **600** goes back into the buck mode illustrated in FIG. 11. The second and fourth switches **412, 422** are closed (i.e., are operated at or near 100% duty cycle) and the first and third switches **411, 421** are open (i.e., are operated at or near 0% duty cycle) while the fifth and sixth switches **431, 432** are variably modulated at appropriate complementary duty cycles to buck the voltage **V₂** at the second voltage bus **402b** and produce the desired AC output voltage **Vₒᵤₜ.** The modulation applied may, for example, be determined based on a difference between the actual AC output voltage **Vₒᵤₜ** and a desired (reference) voltage waveform, using feedback control techniques. It will be appreciated that appropriate control of the fifth and sixth switches **431, 432** is generally dependent on the values of circuit components, such as the third inductor **L₃,** as well as on the nature of the load **20** and the DC power source **12.** As the desired AC output voltage **Vₒᵤₜ** approaches zero from the negative direction, the duty cycles of the fifth and sixth switches **431, 432** approach 0% and 100%, respectively, returning the negative terminal of the DC power source **12** to a neutral reference and segueing into operations for producing a next, positive half cycle, as described above.

A potential benefit of the present invention lies in an ability to limit the peak voltages produced across the switches **411, 412, 421, 422, 431, 432,** a benefit arising from "moving" the DC power source **12** from reference between the positive DC voltage bus (the first voltage bus **402a**) and the neutral bus to reference between the neutral bus and the negative DC voltage bus (the second voltage bus **402b**) during successive half cycles of the AC output voltage **Vₒᵤₜ.** This technique can reduce the blocking voltage requirements for semiconductor devices (e.g., transistors, IGBTs, or similar devices) used to implement the switches **411, 412, 421, 422, 431, 432** in comparison to other designs. This, in turn, can reduce the stress on these semiconductor devices and/or allow the use of semiconductor devices with lower voltage ratings than would be needed, for example, for designs in which the negative terminal of the DC power source is fixedly referenced to the neutral bus.

It will be appreciated that the operations described above can be varied in other ways within the scope of the present invention, such as by using other sequences of the operational states illustrated in FIGs. 6-11. In addition, although the first, second, third, fourth, fifth and sixth switches **411, 412, 421, 422, 431, 432** are referred to in the foregoing discussion as being maintained in "open" or "closed" states during the phases of operation of the converter **600** that produce the waveform portions **1212, 1214, 1216, 1222, 1224, 1226,** it will be appreciated that these "open" and "closed" states include "substantially open" and "substantially closed" states, respectively, i.e., duty cycles greater than 0% and less than 100%, respectively. Generally, such "less open" or "less closed" operation results in changes in operating points of the converter **600,** such as changes in the voltages **V₁, V₂** produced at the first and second voltage busses **402a, 402b** during the various phases of operation. To maintain the desired output voltage **Vₒᵤₜ,** these changes can be compensated for by correspondingly modifying operation of the particular switching circuit **410, 420, 430** that is variably modulated to produce the desired AC output voltage **Vₒᵤₜ** during a particular operational phase. Thus, for example, to produce the second portion **1214** of the first cycle of the AC output voltage **Vₒᵤₜ** (in which the first switching circuit **410** boosts the DC input voltage **V_{DC}** to produce the first voltage **V₁** on the first voltage bus **402a**), the third and fourth switches **421, 422** may be operated at respective duty cycles sufficiently less than 100% and sufficiently greater than 0%, respectively, such that the AC output voltage **Vₒᵤₜ** is bucked with respect to the voltage **V₁**. In order to compensate for this bucking action, the first and second switches **411, 412** may be modulated to achieve an increased boost of the voltage **V₁** on the first voltage bus **402a.** Similar control may be implemented during the other phases of operation.

It will also be appreciated that complementary or "mirror image" implementations also fall within the scope of the present invention. For example, rather than fixedly connecting the positive terminal of the DC power source **12** to the first voltage bus **402a** and allowing the negative terminal of the DC power source **12** to change reference between the neutral bus **N** and the second voltage bus **402a,** the negative terminal of the DC power source **12** could be fixedly connected to the second voltage bus **402b** while the positive terminal of the DC power source changes reference between the neutral bus **N** and the first voltage bus **402a** using a set of switching operations that are complementary to the ones described above.

### Charging Operations

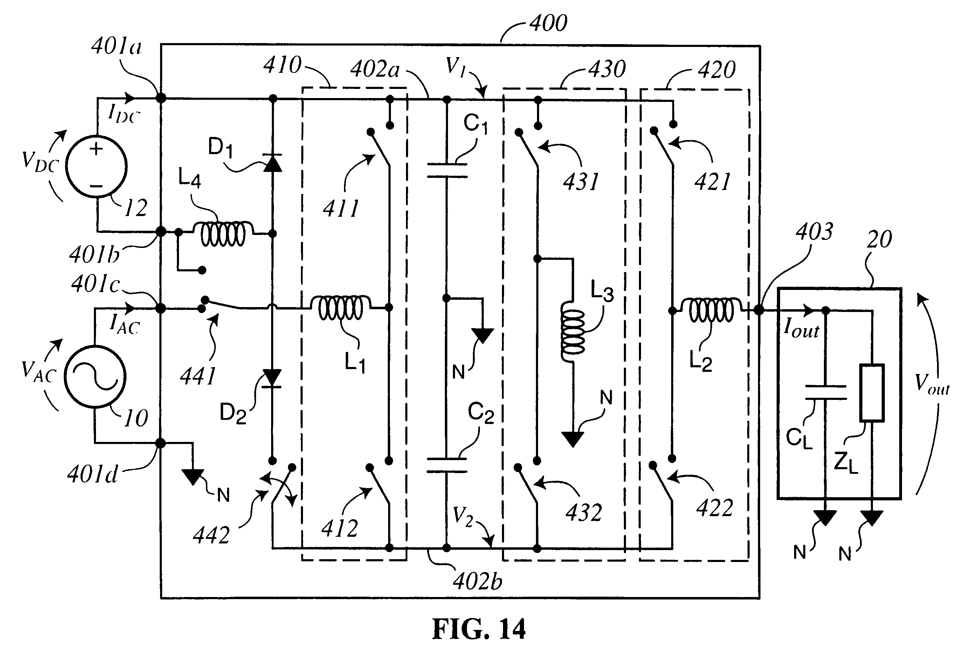

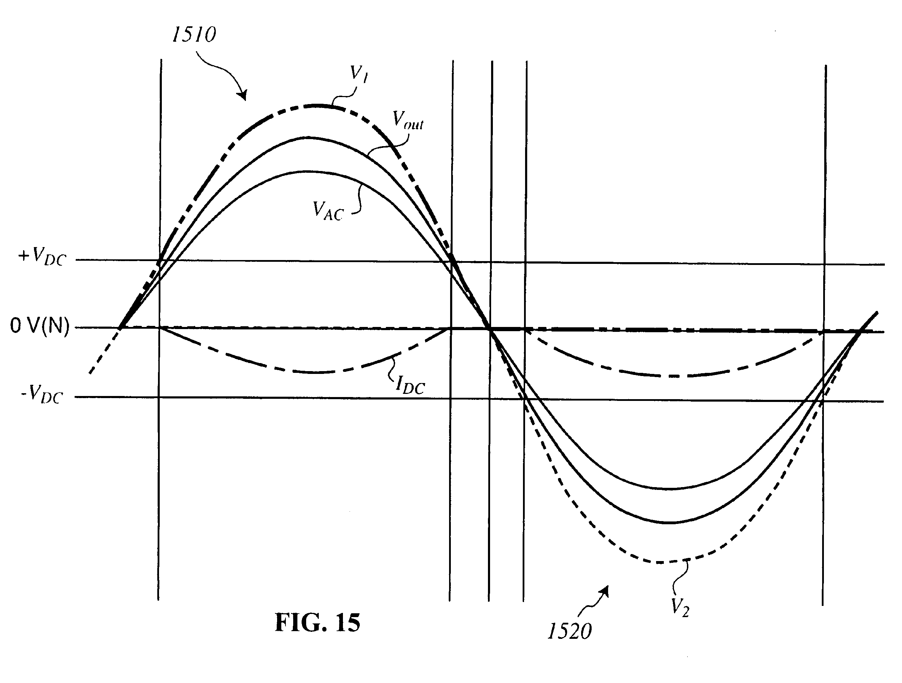

Exemplary charging operations for the converter **400** of FIG. 4 will now be described with reference to FIGs. 14 and 15. As illustrated in FIG. 14, when the seventh switch **441** connects the first inductor **L₁** to the AC power source **10** and the converter **400** is operating in an AC-powered mode as described above, the eighth switch **442** may be modulated to provide charging current to a DC power source **12.** Preferably, the eighth switch **442** intermittently (e.g., at a 20 kHz rate) couples the DC power source **12** between the first and second voltage busses **402a, 402b** through the fourth inductor **L₄** and diode **D₂.** More preferably, the eighth switch **442** is modulated such that current in the fourth inductor **L₄** approaches zero before the eighth switch **442** again couples the DC power source **12** between the first and second voltage busses **402a, 402b.**

Referring to FIG. 15, in a first half-cycle **1510** of the AC input voltage **V_{AC},** the first switch **411** is operated at a relatively high duty cycle while the second switch **412** is operated at a relatively low complementary duty cycle, producing a relatively large positive voltage **V₁** on the first voltage bus **402a** and a relatively low voltage **V₂** on the second voltage bus **402a.** As described above and in the aforementioned United States Patent Application Serial No. 09/374,180, the relative magnitudes of the voltages **V₁, V₂** on the first and second voltage busses **402a, 402b** can be controlled by controlling the relative duty cycles of the fifth and sixth switches **431, 432** of the third switching circuit **430** (which operates as a "balancer" in this AC powered mode). For the embodiment illustrated in FIG. 15, the third switching circuit 430 is operated such that in the first half cycle **1510** of the AC input voltage **V_{AC},** the voltage **V₂** on the second voltage bus **402b** approaches the level of the neutral bus **N** (~0V). Consequently, the magnitude of the voltage across the series combination of the DC power source **12** and the fourth inductor **L₄** when the eighth switch **442** is closed is approximately the magnitude of the voltage **V₁** on the first voltage bus **402a** with respect to the neutral bus **N.**

Little or no charging current **I_{DC}** flows from the first voltage bus **402a** to the DC power source **12** until the magnitude of the voltage **V₁** on the first voltage bus **402a** exceeds the DC voltage **V_{DC}** produced by the DC power source **12.** When the magnitude of the voltage **V₁** on the first voltage bus **402a** exceeds the DC voltage **V_{DC},** however, a non-zero current **I_{DC}** (here shown as negative to indicate flow into the DC power source **12)** flows into the DC power source **12,** until the magnitude of the voltage **V₁** on the first voltage bus **402a** again is less than the DC voltage **V_{DC}.** It will be appreciated that in FIG. 15, the current **I_{DC}** is shown as an average, with ripples produced by modulation of the eighth switch **442** not shown for purposes of clarity of illustration.

In a second half-cycle **1520** of the AC input voltage **V_{AC},** the first switch **411** is operated at a relatively low duty cycle while the second switch **412** is operated at a relatively high duty cycle. As a result, a relatively large negative voltage **V₂** is produced on the second voltage bus **402b** and a relatively small positive voltage **V₁** is produced on the first voltage bus **402a.** Similar to operations in the first half cycle **1510,** the third switching circuit **430** is operated such that the voltage **V₁** on the first voltage bus **402a** approaches the level of the neutral bus **N** (~0V). Consequently, the magnitude of the voltage across the series combination of the DC power source **12** and the fourth inductor **L₄** when the eighth switch **442** is closed is approximately the magnitude of the voltage **V₂** on the second voltage bus **402b** with respect to the neutral bus **N.**

Also similar to the first cycle **1510,** little or no current **I_{DC}** flows into the DC power source **12** until the magnitude of the voltage **V₂** on the second voltage bus **402b** exceeds the DC voltage **V_{DC}**. However, when the magnitude of the voltage **V₂** on the second voltage bus **402b** exceeds the DC voltage **V_{DC}** produced by the DC power source **12,** a current **I_{DC}** flows into the DC power source **12** until the magnitude of the voltage **V₂** on the second voltage bus **402b** again is less than the DC voltage **V_{DC}.** Accordingly, it can be seen that the DC power source **12** draws current from the AC source 10 in a "full-wave" fashion, i.e., in both the positive and negative half cycles **1510, 1520.** This full-wave charging can be advantageous in comparison to charging modes in which the DC power source **12** is charged only in a particular half-cycle (positive or negative), as it can reduce peak currents handled by the switching elements of the converter **400.**

A limitation on the charging current **I_{DC}** delivered to the DC power source **12** can arise from lack of current flow into the DC power source **12** until the voltage across the series combination of the DC power source **12** and the fourth inductor **L₄** exceeds the DC voltage **V_{DC}**. For example, if the DC power source **12** is a **120V** battery and the converter **400** is operated such that the voltages **V₁, V₂** conform to a 120V (rms) sinewave in the respective positive and negative half cycles **1510, 1520,** little or no current would flow into the DC power source **12** for a significant portion of the AC cycle (~50%).

According to another aspect of the present invention, a desired charging current may be achieved by boosting the voltages **V₁**, **V₂** on the first and second voltage busses **402a, 402b** using the first switching circuit **410,** while correspondingly controlling the second switching circuit **420** to produce a desired level in the AC output voltage **Vₒᵤₜ.** As described above, a boost in the voltages **V₁**, **V₂** produced on the first and second voltage busses **402a, 402b** can be achieved by increasing the boost produced by the first switching circuit **410.** This can increase the portion of the first and second half cycles **1510, 1520** during which the current **I_{DC}** flowing into the DC power source **12** is greater than zero. While operating the first switching circuit **410** in such a manner, the second switching circuit **420** can be operated in a buck mode to produce a desired **AC** output voltage **Vₒᵤₜ.** It will be understood that, in general, the voltages **V₁, V₂** on the first and second voltage busses **402a, 402b** can be increased and decreased to control the charging of the DC power source **12** within constraints arising from the voltage ratings of the switches **411, 412, 421, 422, 431, 432,** the current demands of the load **20,** and other factors.

### Power Converter with Added Storage Capability

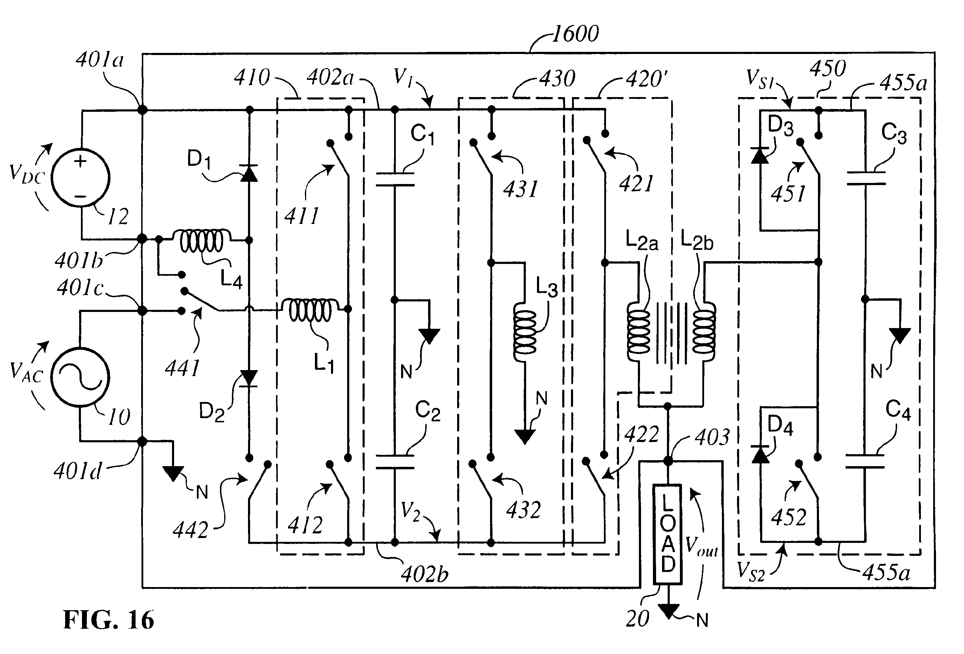

FIG. 16 illustrates a power converter **1600** according to another embodiment of the present invention. The power converter **1600** includes first and third switching circuits **410, 430** that operate as described above with reference to FIG. 4. A second switching circuit **420'** includes switches **421, 422** and an output inductor **L₂ₐ** that is electrically and inductively coupled to a second inductor **L_{2b}** that forms part of a storage circuit **450.**

The storage circuit **450** includes ninth and tenth switches **451, 452** that selectively couple first and second storage busses **455a, 455b** to an output terminal **403** via the coupled inductor **L_{2b}.** Respective freewheeling diodes **D₃, D₄** are connected across respective ones of the ninth and tenth switches **451, 452.** It will be appreciated that the ninth and tenth switches **455a, 455b** and the freewheeling diodes **D₃, D₄** may be implemented using, for example, discrete switching transistors (e.g., IGBTs) and discrete diodes, or may be implemented using integrated transistor/diode combinations. The ninth and tenth switches **451, 452** may be controlled using a microcontroller, microprocessor or other controller, for example, using a switch control circuit such as the switch control circuit **540** of FIG. 5.

Respective storage capacitors **C₃, C₄** connect respective ones of the first and second storage busses **455a, 455b** to the neutral bus **N,** and provide energy storage. In a "line adaptive" mode of operation, the presence of the storage circuit **450** can provide the converter **1600** with the capability to provide power to the load **20** when transitioning between an AC-powered mode and a DC powered mode. In addition, in an "online" mode of operation, the presence of the storage circuit **450** can enable the power converter **1600** to operate in concert with the first, second and third switching circuits **410, 420', 430** to provide control of the current waveform drawn from the AC source **10**. In this manner, the power converter **1600** can implement power factor control.

### Line Adaptive Operation

Line adaptive operation of the first, second and third switching circuits **410, 420', 430** of the power converter **1600** can be achieved along the lines of the AC-powered operations described above with reference to FIG. 4 and in the aforementioned United States Patent Application Serial No. 09/374,180. For example, when the AC input voltage **V_{AC}** provided by the AC power source **10** is at or near a nominal level (e.g., the desired level for the AC output voltage **Vₒᵤₜ),** the first and second switches **411, 412** of the first switching circuit **410** can be complementarily opened and closed for alternating half cycles, such that the voltages **V₁, V₂** on the first and second voltage busses **402a, 402b** essentially track the **AC** input voltage **V_{AC}** for respective positive and negative half cycles. The third and fourth switches **421, 422** of the second switching circuit **420'** can be operated in a similar manner, connecting the load **20** to alternating ones of the first and second voltage busses **402a, 402b** through the inductor **L₂ₐ** to produce successive half cycles of the AC output voltage **Vₒᵤₜ.** The third switching circuit **430** (or "balancer") is preferably operated such that the fifth switch **431** is closed when the AC input voltage **V_{AC}** is negative and the sixth switch **432** is closed when the AC input voltage **V_{AC}** is positive. However, it will be understood that operation of the third switching circuit **430** can be varied to change the relative magnitudes of the voltages **V₁, V₂** that are produced on the first and second voltage busses **402a, 402b.**

If the AC input voltage **V_{AC}** is greater than the desired output voltage **V_{out,}** the operation of the switches of the first and third switching circuits **410, 430** remains the same, but the operation of the second switching circuit **420'** can be changed such that it bucks the AC output voltage **Vₒᵤₜ** with respect to the voltages **V₁, V₂** on the first and second voltage busses **402a, 402b** and maintains the AC output voltage **Vₒᵤₜ** at a desired level. If the AC input voltage **V_{AC}** is lower than the desired level for the output voltage **Vₒᵤₜ,** the second and third switching circuits **420', 430** can be operated as under the nominal conditions described above, while the first switching circuit **410** is controlled such that the voltages **V₁, V₂** on the first and second voltage busses **402a, 402b** are boosted with respect to the AC input voltage **V**_{**AC**,} maintaining the AC output voltage **V_{AC}** at the desired level. During these AC-powered operations, the ninth and tenth switches **451, 452** of the power converter circuit **450** preferably remain open, such that the freewheeling diodes **D₃, D₄** rectify the AC output voltage **Vₒᵤₜ** and "peak charge" the storage capacitors **C₃, C₄,** i.e., the first and second storage busses **455a, 455b** are charged to respective positive and negative voltages at or near the respective positive and negative peak voltages of the AC output voltage **Vₒᵤₜ.**

The power converter **1600** can be transitioned between an AC-powered mode and a DC-powered mode by operating the seventh switch **441** such that the first inductor **L₁** is decoupled from the AC power source **10** and coupled to the negative terminal of the DC power source **12.** This transition may be made responsive to sensing a reduction of the AC input voltage **V_{AC}** produced by the AC power source **10** or other fault condition. During transitioning of the seventh switch **441,** the power converter **1600** may experience a momentary reduction or other degradation of the AC output voltage **Vₒᵤₜ** produced by the converter **1600.**

Although such a degradation may be acceptable in some applications, it may cause problems, such as loss of data or other information, in other applications. According to an aspect of the present invention, this degradation can be reduced through appropriate operation of the storage circuit **450.** When a fault in the AC input voltage **V_{AC}** occurs, the converter **1600** can transition the seventh switch **441** from connecting the first inductor **L₁** to the AC power source **10** to connecting the first inductor **L₁** to the negative terminal of the **DC** power source **12.** Concurrently, the converter **1600** can selectively operate the ninth and tenth switches **451, 452** such that at least one of the first and second storage busses **455a, 455b** is coupled to the load **20** through the inductor **L_{2b}** and provides power to the load **20.** It will be appreciated that the particular one of the first and second storage busses **455a, 455b** coupled to the load **20** may depend on whether the AC output voltage **Vₒᵤₜ** is currently in a positive or a negative half cycle, as well on the magnitude of the AC output voltage **Vₒᵤₜ.** For example, if transitioning of the seventh switch **441** requires more than one half cycle, the ninth and tenth switches **451, 452** may be operated in an alternating fashion to synthesize the desired AC output voltage **V_{AC}.** In addition, the ninth and tenth switches **451, 452** may be modulated to regulate the magnitude of the AC output voltage **V_{AC}.**

### Online Operation

In an inline mode, the first switching circuit **410** of the converter **1600** can be operated as a current source, with the first and second switches **411, 412** being pulse width modulated (PWM) such that the AC input current **I_{AC}** has a desired waveform. The fifth and sixth switches **431, 432** in the third switching circuit **430** (acting as a "balancer") can be operated at or near complementary 50% duty cycles, such that the voltages **V₁, V₂** at the first and second voltage busses **402a, 402b** are constrained to have approximately equal magnitude. The second switching circuit **420'** can be operated as an inverter, producing the AC output voltage **Vₒᵤₜ** from the voltages **V₁, V₂.**

If the instantaneous current delivered to the load **20** by the second switching circuit is sufficiently high such that the constrained current draw from the AC source **10** by the first switching circuit **410** and the stored energy available in the capacitors **C₁, C₂** is unable to meet the instantaneous demand, the voltages **V₁, V₂** at the first and second voltage busses **402a, 402b** could significantly vary, resulting in difficulty in supplying a desired output voltage **Vₒᵤₜ.**

Under such conditions, the storage circuit **450** can supply the needed additional energy needed to maintain the AC output voltage **Vₒᵤₜ.** The ninth and tenth switches **451, 452** in the storage circuit **450** can be operated in synchronism with the third and fourth switches **421, 422** in the second switching circuit **420',** i.e., such that the ninth switch **451** opens and closes in sync with the third switch **421** and the tenth switch **452** opens and closes in sync with the fourth switch **422.** In particular, when the third switch **421** and the ninth switch **451** are conducting, current can flow to the load **20** from either the first voltage bus **402a** or the first storage bus **455a** to equalize the voltage **V₁** at the first voltage bus **402a** and the voltage **V_{S1}** at the first storage bus **455a.** Similarly, when the fourth switch **422** and the tenth switch **452** are conducting, current can flow to the load **20** from either the second voltage bus **402b** or the second storage bus **455b** to equalize the voltage **V₂** at the second voltage bus **402b** and the voltage **V_{S2}** at the second storage bus **455b.** This can decouple current flowing to the load **20** from the current **I_{AC}** drawn from the AC power source **10.** Thus, for example, even if the load **20** is a nonlinear load that exhibits a pulsed current demand centered at the peaks of the AC output voltage **Vₒᵤₜ,** the converter **1600** can be constrained to draw a near sinusoidal (or quasi-sinusoidal) current from the AC power source **10,** as the storage capacitors **C₃, C₄** of the storage circuit **450** meet excess current demand of the load **20** during the current demand pulses and recharge during those portions of the AC output voltage **Vₒᵤₜ** waveform when there is reduced current demand from the load **20.** Preferably, in such an online mode, the first, second, and third switching circuits **410, 420', 430** and the storage circuit **450** are operated such that the converter **1600** draws a near sinusoidal or quasi-sinusoidal current **I_{AC}** from the AC power source **10** that is substantially in phase with the AC input voltage **V_{AC},** thus operating the converter **1600** at or near unity power factor. However, it will be appreciated that the converter **1600** can be operated such that other AC input current **I_{AC}** waveforms are produced.

Other variations are also possible within the scope of the present invention. For example, to reduce inrush current from the output terminal **403** to the storage capacitors **C₃, C₄** when the second switching circuit **420'** first acts to produce the AC output voltage **Vₒᵤₜ,** the storage capacitors **C₃, C₄** can be precharged by connecting the first voltage bus **402a** to the first storage bus **455a** with a series combination of a diode and resistor (not shown) and connecting the second voltage bus **402b** to the second storage bus **455b** with a series combination of a diode and a resistor (not shown). Once the storage capacitors **C₃, C₄** have charged (with the third, fourth, ninth and tenth switches **421, 422, 451, 452** "off"), "line adaptive" or "online" operations of the converter **1600** can proceed as described above.

### DC-Powered Operation

The converter **1600** can be operated in a DC powered mode in which reference for the negative terminal of the DC power source **12** is moved between the neutral bus N and the second voltage bus **402b,** similar to the operations described with reference to FIGs. 6-12. Alternatively, the first switching circuit **410** can be operated in a boost mode to provide positive and negative DC voltages **V₁, V₂** at the first and second voltage busses **402a, 402b.** Concurrently, the second switching circuit **420'** and the ninth and tenth switches **451, 452** of the storage circuit can be operated in synchronism, producing a desired AC output voltage **Vₒᵤₜ** waveform at the output terminal **403** in a manner similar to the on line AC operations described above.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A power converter, comprising:
first and second voltage busses (402a, 402b);
a first input port having first and second terminals (401 a, 401 b), the first terminal (401 a) coupled to one of the first and second voltage busses (402a, 402b);
a neutral bus (N);
an output terminal (403);
a first inductance (L₁);
a second inductance (L₂);
a third inductance (L₃);
a first switching circuit (410) operative to selectively couple the second terminal (401 b) of the first input port to the first and second voltage busses **(402a,** 402b) through the first inductance (L₁);
a second switching circuit (420) operative to selectively couple the first and second voltage busses (402a, 402b) to the output terminal (403) through the second inductance (L₂); and
a third switching circuit (430) operative to selectively couple the first and second voltage busses (402a, 402b) to the neutral bus (N) through the third inductance (L₃).

2. A power converter according to Claim1, wherein the first, second and third switching circuits (410, 420, 430) are operative to produce an AC output voltage at the output terminal (403) from a DC input voltage at the first input port such that alternating ones of the first and second terminals of the first input port are referenced to the neutral bus (N) for successive first and second half cycles of the AC output voltage.

3. A power converter according to Claim 2, wherein the first, second and third switching circuits (410, 420, 430) are operative to produce the AC output voltage at the output terminal (403) from a DC input voltage at the first input port such that:
at least one of the second switching circuit (420) and the third switching circuit (430) regulates the AC output voltage for a first portion of a first half cycle of the AC output voltage; and
the first switching circuit (410) regulates the AC output voltage for a second portion of the first half cycle of the AC output voltage.

4. A power converter according to Claim 3:
wherein the first portion of the first half cycle of the AC output voltage comprises a portion of the first half cycle of the AC output voltage for which the magnitude of the AC output voltage is less than the magnitude of the DC input voltage; and
wherein the second portion of the first half cycle of the AC output voltage comprises a portion of the first half cycle of the AC output voltage for which the magnitude of the AC output voltage is greater than the magnitude of the DC input voltage.

5. A power converter according to Claim 3, wherein the first half cycle comprises a positive half-cycle of the AC output voltage, and wherein the first, second and third switching circuits (410, 420, 430) are further operative to produce the AC output voltage at the output terminal from the DC input voltage at the first input port such that:
at least one of the second switching circuit (420) and the third switching circuit (430) regulates the AC output voltage for a first portion of a negative second half cycle of the AC output voltage; and
the first switching circuit (410) regulates the AC output voltage for a second portion of the negative second half cycle of the AC output voltage.

6. A power converter according to Claim 5:
wherein the first portion of the negative second half cycle of the AC output voltage comprises a portion of the negative second half cycle of the AC output voltage for which the magnitude of the AC output voltage is less than the magnitude of the DC input voltage; and
wherein the second portion of the negative second half cycle of the AC output voltage comprises a portion of the second half cycle of the AC output voltage for which the magnitude of the AC output voltage is greater than the magnitude of the DC input voltage.

7. A power converter according to Claim 1:
wherein the first inductance (L₁) comprises first and second terminals, the first terminal of the first inductance coupled to the second terminal of the first input port;
wherein the first switching circuit (410) comprises:
a first switch (411) operative to couple and decouple the second terminal of the first inductance (L₁) and the first voltage bus (402a); and
a second switch (412) operative to couple and decouple the second terminal of the first inductance (L₁) and the second voltage bus (402b);
wherein the second inductance (L₂) comprises first and second terminals, the first terminal of the second inductance (L₂) coupled to the output terminal (403);
wherein the second switching circuit (420) comprises:
a third switch (421) operative to couple and decouple the second terminal of the second inductance (L₂) and the first voltage bus (402a); and
a fourth switch (422) operative to couple and decouple the second terminal of the second inductance (L₂) and the second voltage bus (402b); and
wherein the third inductance (L₃) comprises first and second terminals, the first terminal of the third inductance (L₃) connected to the neutral bus (N);
wherein the third switching circuit (430) comprises:
a fifth switch (431) operative to couple and decouple the second terminal of the third inductance (L₃) and the first voltage bus (402a); and
a sixth switch (432) operative to couple and decouple the second terminal of the third inductance (L₃) and the second voltage bus (402b).

8. A power converter according to Claim 7,
wherein the first and second switches (411, 412) operate in a substantially complementary fashion,
wherein the third and fourth switches (421, 422) operate in a substantially complementary fashion, and
wherein the fifth and sixth switches (431, 432) operate in a substantially complementary fashion.

9. A power converter according to Claim 7, further comprising a seventh switch (441) operative to couple and decouple the first terminal of the first inductance (L₁) to the second terminal (401 b) of the first input port.

10. A power converter according to Claim 9, further comprising a battery connected to the first and second terminals (401 a, 401 b) of the first input port.

11. A power converter according to Claim 1, further comprising:
a second input port; and
a fourth switching circuit (441, 442) operative to:
concurrently couple the second terminal (401 b) of the first input port to the second voltage bus (402b), decouple the second terminal (401 b) of the first input port from the first switching circuit (410), and couple the first switching circuit (410) to a first terminal (401 c) of the second input port, in a first mode; and
concurrently couple the second terminal (401 b) of the first input port to the first switching circuit (410), decouple the second terminal (401 b) of the first input port from the second voltage bus (402b), and decouple the first terminal (401 c) of the second input port from the first switching circuit (410), in a second mode.

12. A power converter according to Claim11, wherein the first, second and third switching circuits (410, 420, 430) are operative to generate a DC voltage across the first and second voltage busses (402a, 402b) from an AC voltage at the second input port.

13. A power converter according to Claim 12, wherein the first, second and third switching circuits (410, 420, 430) are operative to generate a DC voltage across the first and second voltage busses (402a, 402b) in the first mode that is sufficient to cause power to be transferred from the first and second voltage busses (402a, 402b) to the first input port.

14. A power converter according to Claim 1, further comprising a storage circuit coupled to the output terminal, the storage circuit including:
a capacitive storage element (C₃, C₄);
a rectifying circuit (D₃, D₄) that rectifyingly couples the capacitive storage element (C₃, C₄) to the output terminal (403) to produce a DC voltage across the capacitive storage element (C₃, C₄) from an AC output voltage at the output terminal (403); and
a fourth switching circuit (450) that selectively couples the capacitive storage element (C₃, C₄) to the output terminal (403).

15. A power converter according to Claim 14:
wherein the storage circuit comprises first and second storage busses;
wherein the capacitive storage element (C₃, C₄) comprises respective first and second capacitors coupling respective ones of the first and second storage busses to the neutral bus (N); and
wherein the fourth switching circuit comprises:
a first switch operative to couple and decouple the first storage bus and the output terminal; and
a second switch operative to couple and decouple the second storage bus and the output terminal.

16. A method of generating an AC output voltage at a load (20) from a DC input voltage produced by a DC power source, the method comprising the steps of :
coupling a first terminal (401a) of the DC power source to one of a first voltage bus (402a) and a second voltage bus (402b);
selectively coupling a second terminal (401 b) of the DC power source to the first voltage bus (402a) and a second voltage bus (402b) through a first inductance (L₁);
coupling a first terminal of a load (20) to a neutral bus (N);
selectively coupling the first and second voltage busses (402a, 402b) to a second terminal of the load (20) through a second inductance (L₂); and
selectively coupling the first and second voltage busses (402a, 402b) to the neutral bus (N) through a third inductance (L₃).

17. A method according to Claim 16:
wherein said step of selectively coupling a second terminal (401 b) of the DC power source to the first voltage bus (402a) and a second voltage bus (402b) comprises the step of selectively coupling respective ones of the first and second voltage busses (402a, 402b) to the DC power source through respective first and second switches (411, 412);
wherein said step of selectively coupling the first and second voltage busses (402a, 402b) to a second terminal of the load (20) comprises the step of selectively coupling respective ones of the first and second voltage busses (402a, 402b) to the second terminal of the load (20) through respective third and fourth switches (421, 422); and
wherein said step of selectively coupling the first and second voltage busses (402a, 402b) to the neutral bus (N) comprises the step of selectively coupling respective ones of the first and second voltage busses (402a, 402b) to the neutral bus (N) through respective fifth and sixth switches (431, 432).

18. A method according to Claim 16, comprising the step of alternatingly referencing the first and second terminals (401 a, 401 b) of the DC power source to the neutral bus (N) for successive first and second half cycles of the AC output voltage.

19. A method according to Claim 16, further comprising the steps of :
selectively coupling the first and second voltage busses (402a, 402b) to at least one of the second terminal of the load (20) and the neutral bus (N) to regulate the AC output voltage for a first portion of a first half cycle of the AC output voltage for which the magnitude of the AC output voltage is less than the magnitude of the DC input voltage; and
selectively coupling the first and second voltage busses (402a, 402b) to the second terminal (401 b) of the DC power source to regulate the AC output voltage for a second portion of the first half cycle of the AC output voltage for which the magnitude of the AC output voltage is greater than the magnitude of the DC input voltage.

20. A method according to Claim 17, further comprising the steps of :
selectively coupling the first and second voltage busses (402a, 402b) to the second terminal of the load (20) through the third and fourth switches (421, 422) or to the neutral bus (N) through the fifth and sixth switches (431, 432) to regulate the AC output voltage for a first portion of a first half cycle of the AC output voltage for which the magnitude of the AC output voltage is less than the magnitude of the DC input voltage; and
selectively coupling the first and second voltage busses (402a, 402b) to the second terminal (401 b) of the DC power source through the first and second switches (411, 412) to regulate the AC output voltage for a second portion of the first half cycle of the AC output voltage for which the magnitude of the AC output voltage is greater than the magnitude of the DC input voltage.

21. A method according to Claim 19, wherein the first half cycle of the AC output voltage comprises a positive first half-cycle of the AC output voltage, and wherein the method further comprise the steps of :
selectively coupling the first and second voltage busses (402a, 402b) to at least one of the second terminal of the load (20) and the neutral bus (N) to regulate the AC output voltage for a first portion of a negative second half cycle of the AC output voltage for which the magnitude of the AC output voltage is less than the magnitude of the DC input voltage; and
selectively coupling the first and second voltage busses (402a, 402b) to the second terminal (401b) of the DC power source to regulate the AC output voltage for a second portion of the negative second half cycle of the AC output voltage for which the magnitude of the AC output voltage is greater than the magnitude of the DC input voltage.

22. A method according to Claim 20, wherein the first half-cycle of the AC output voltage comprises a positive first half cycle of the AC output voltage, and wherein the method further comprises the steps of :
selectively coupling the first and second voltage busses (402a, 402b) to the second terminal of the load (20) through the third and fourth switches (421, 422) or to the neutral bus (N) through the fifth and sixth switches (431, 432) to regulate the AC output voltage for a first portion of a negative second half cycle of the AC output voltage for which the magnitude of the AC output voltage is less than the magnitude of the DC input voltage; and
selectively coupling the first and second voltage busses (402a, 402b) to the second terminal (401 b) of the DC power source through the first and second switches (411, 412) to regulate the AC output voltage for a second portion of the negative second half cycle of the AC output voltage for which the magnitude of the AC output voltage is greater than the magnitude of the DC input voltage.

23. A method according to Claim 16, wherein the DC power source is a battery.

24. A method according to Claim 16, further comprising the steps of :
rectifyingly coupling a capacitive storage element (C₃, C₄) to the second terminal of the load (20) to produce a DC voltage across the capacitive storage element (C₃, C₄) from the AC output voltage at the second terminal of the load (20); and
selectively coupling the capacitive storage element (C₃, C₄) to the second terminal of the load (20) through a switching circuit to transfer power between the capacitive storage element (C₃, C₄) to the load (20).

## Patentansprüche

1. Ein Stromrichter bzw. Leistungswandler, der Folgendes aufweist:
erste und zweite Spannungsbusse (402a, 402b);
einen ersten Eingangsport mit ersten und zweiten Anschlüssen (401 a, 401 b), wobei der erste Anschluss (401 a) an den ersten und zweiten Spannungsbus (402a, 402b) gekoppelt ist;
einen neutralen Bus (N);
einen Ausgangsanschluss (403);
eine erste Induktivität (L₁);
eine zweite Induktivität (L₂);
eine dritte Induktivität (L₃);
einen ersten Umschaltschaltkreis (410) betriebsfähig, um selektiv den zweiten Anschluss (401 b) des ersten Eingangsports an die ersten und zweiten Spannungsbusse (402a, 402b) über die erste Induktivität (L₁) zu koppeln;
einen zweiten Umschaltschaltkreis (420) betriebsfähig, um selektiv die ersten und zweiten Spannungsbusse (402a, 402b) an den Ausgangsanschluss (403) über die zweite Induktivität (L₂) zu koppeln; und
einen dritten Umschaltschaltkreis (430) betriebsfähig, um selektiv die ersten und zweiten Spannungsbusse (402a, 402b) an den neutralen Bus (N) über die dritte Induktivität (L₃) zu koppeln.

2. Ein Leistungswandler gemäß Anspruch 1, wobei die ersten, zweiten und dritten Umschaltschaltkreise (410, 420, 430) betriebsfähig sind, um eine AC-Ausgangswechselspannung bei dem Ausgangsanschluss (403) von einer DC-Eingangsgleichspannung bei dem ersten Eingangsport so zu produzieren, dass Alternierende der ersten und zweiten Anschlüsse des ersten Eingangsports auf den neutralen Bus (N) für nachfolgende erste und zweite Halbzyklen der AC-Ausgangswechselspannung referenziert werden.

3. Ein Leistungswandler gemäß Anspruch 2, wobei die ersten, zweiten und dritten Umschaltschaltkreise (410, 420, 430) betriebsfähig sind, um die AC-Ausgangswechselspannung am Ausgangsanschluss (403) von einer DC-Eingangsgleichspannung am ersten Ausgangsport so zu produzieren, dass:
der zweite Umschaltschaltkreis (420) und/oder der dritte Umschaltschaltkreis (430) die AC-Ausgangswechselspannung für einen ersten Teil des ersten Halbzyklus der AC-Ausgangswechselspannung reguliert; und
der erste Umschaltschaltkreis (410) die AC-Ausgangswechselspannung für einen zweiten Teil des ersten Halbzyklus der AC-Ausgangswechselspannung reguliert.

4. Ein Leistungswandler gemäß Anspruch 3:
wobei der erste Teil des ersten Halbzyklus der AC-Ausgangswechselspannung einen Teil des ersten Halbzyklus der AC-Ausgangswechselspannung aufweist, für den der Betrag der AC-Ausgangswechselspannung weniger als der Betrag der DC-Eingangsgleichspannung ist; und
wobei der zweite Teil des ersten Halbzyklus der AC-Ausgangswechselspannung einen Teil des ersten Halbzyklus der AC-Ausgangswechselspannung aufweist, für den der Betrag der AC-Ausgangswechselspannung größer als der Betrag der DC-Eingangsgleichspannung ist.

5. Ein Leistungswandler gemäß Anspruch 3, wobei der erste Halbzyklus einen positiven Halbzyklus der AC-Ausgangswechselspannung aufweist, und wobei die ersten, zweiten und dritten Umschaltschaltkreise (410, 420, 430) weiterhin betriebsfähig sind, um die AC-Ausgangswechselspannung am Ausgangsanschluss der DC-Eingangsgleichspannung am ersten Eingangsport so zu produzieren, dass:
der zweite Umschaltschaltkreis (420) und/oder der dritte Umschaltschaltkreis (430) die AC-Ausgangswechselspannung für einen ersten Teil eines negativen zweiten Halbzyklus der AC-Ausgangswechselspannung reguliert; und
der erste Umschaltschaltkreis (410) die AC-Ausgangswechselspannung für einen zweiten Teil des negativen zweiten Halbzyklus der AC-Ausgangswechselspannung reguliert.

6. Ein Leistungswandler gemäß Anspruch 5, wobei der erste Teil des negativen zweiten Halbzyklus der AC-Ausgangswechselspannung einen Teil des negativen zweiten Halbzyklus der AC-Ausgangswechselspannung aufweist, für den der Betrag der AC-Ausgangswechselspannung weniger als der Betrag der DC-Eingangsgleichspannung ist; und
wobei der zweite Teil des negativen zweiten Halbzyklus der AC-Ausgangswechselspannung einen Teil des zweiten Halbzyklus der AC-Ausgangswechselspannung aufweist, für den der Betrag der AC-Ausgangswechselspannung größer als der Betrag der DC-Eingangsgleichspannung ist.

7. Ein Leistungswandler gemäß Anspruch 1:
wobei die erste Induktivität (L₁) erste und zweite Anschlüsse aufweist,
wobei der erste Anschluss der ersten Induktivität an den zweiten Anschluss des ersten Eingangsports gekoppelt ist;
wobei der erste Umschaltschaltkreis (410) Folgendes aufweist:
einen erster Schalter (411) betriebsfähig, um den zweiten Anschluss der ersten Induktivität (L₁) an den ersten Spannungsbus (402a) an- bzw. abzukoppeln; und
einen zweiter Schalter (412) betriebsfähig, um den zweiten Anschluss der ersten Induktivität (L₁) an den zweiten Spannungsbus (402b) an- bzw. abzukoppeln;
wobei die zweite Induktivität (L₂) erste und zweite Anschlüsse aufweist, wobei der erste Anschluss der zweiten Induktivität (L₂) an den Ausgangsanschluss (403) gekoppelt ist;
wobei der zweite Umschaltschaltkreis Folgendes aufweist:
einen dritten Schalter (421) betriebsfähig, um den zweiten Anschluss der zweiten Induktivität (L₂) an den zweiten Spannungsbus (402a) an- bzw. abzukoppeln; und
einen vierten Schalter (422) betriebsfähig, um den zweiten Anschluss der zweiten Induktivität (L₂) an den zweiten Spannungsbus (402b) an- bzw. abzukoppeln; und
wobei die dritte Induktivität (L₃) erste und zweite Anschlüsse aufweist,
wobei der erste Anschluss der dritten Induktivität (L₃) mit dem neutralen Bus (N) verbunden ist; wobei der dritte Umschaltschaltkreis (430) Folgendes aufweist:
einen fünften Schalter (431) betriebsfähig, um den zweiten Anschluss der dritten Induktivität (L₃) an den ersten Spannungsbus (402a) an- bzw. abzukoppeln; und
einen sechsten Schalter (432) betriebsfähig, um den zweiten Anschluss der dritten Induktivität (L₃) and den zweiten Spannungsbus (402b) an- bzw. abzukoppeln.

8. Ein Leistungswandler gemäß Anspruch 7,
wobei die ersten und zweiten Schalter (411, 412) auf eine im Wesentlichen komplementäre Art und Weise operieren, wobei die dritten und vierten Schalter (421, 422) auf eine im Wesentlichen komplementäre Art und Weise operieren, und
wobei die fünften und sechsten Schalter (431, 432) auf eine im Wesentlichen komplementäre Art und Weise operieren.

9. Ein Leistungswandler gemäß Anspruch 7, der weiterhin einen siebten Schalter (441) aufweist, und zwar betriebsfähig, um den ersten Anschluss der ersten Induktivität an den ersten Anschluss (401 b) des ersten Eingangsports an- bzw. abzukoppeln.

10. Ein Leistungswandler gemäß Anspruch 9, der weiterhin eine Batterie verbunden mit den ersten und zweiten Anschlüssen (401 a, 401 b) des ersten Eingangsports aufweist.

11. Ein Leistungswandler gemäß Anspruch 1, der weiterhin Folgendes aufweist:
einen zweiten Eingangsport; und
einen vierten Umschaltschaltkreis (441, 442) betriebsfähig, um:
gleichzeitig den zweiten Anschluss (402b) des ersten Eingangsports an den zweiten Spannungsbus (402b) anzukoppeln, den zweiten Anschluss (401 b) des ersten Eingangsports von dem ersten Umschaltschaltkreis (410) abzukoppeln, und den ersten Umschaltschaltkreis (410) an einen ersten Anschluss (401c) des zweiten Eingangsports anzukoppeln, und zwar in einem ersten Modus; und
gleichzeitig den zweiten Anschluss (401 b) des ersten Eingangsports an den ersten Umschaltschaltkreis (410) anzukoppeln, den zweiten Anschluss (401 b) des ersten Eingangsports von dem zweiten Spannungsbus (402b) abzukoppeln und den ersten Anschluss (401c) des zweiten Eingangsports von dem ersten Umschaltschaltkreis (410) abzukoppeln, und zwar in einem zweiten Modus.

12. Ein Leistungswandler gemäß Anspruch 11, wobei die ersten, zweiten und dritten Umschaltschaltkreise (410, 420, 430) betriebsfähig sind, eine DC-Gleichspannung über die ersten und zweiten Spannungsbusse (402a, 402b) von einer AC-Wechselspannung am zweiten Eingangsport zu generieren.

13. Ein Leistungswandler gemäß Anspruch 12, wobei die ersten, zweiten und dritten Umschaltschaltkreise (410, 420, 430) betriebsfähig sind, um eine DC-Gleichspannung über die ersten und zweiten Spannungsbusse (402a, 402b) in dem ersten Modus zu generieren, die ausreichend ist, um Leistung zu bewirken, die von den ersten und zweiten Spannungsbussen (402a, 402b) zu dem ersten Eingangsport transferiert werden soll.

14. Ein Leistungswandler gemäß Anspruch 1, der weiterhin eine Speicherschaltung aufweist, die an den Ausgangsanschluss gekoppelt ist, wobei die Speicherschaltung Folgendes beinhaltet:
ein kapazitives Speicherelement (C₃, C₄);
eine Gleichrichterschaltung (D₃, D₄), die das kapazitive Speicherelement (C₃, C₄) gleichrichtend an den Ausgangsanschluss (403) koppelt, um eine DC-Gleichspannung über das kapazitive Speicherelement (C₃, C₄) von einer AC-Ausgangswechselspannung an dem Ausgangsanschluss (403) produziert;
ein vierter Umschaltschaltkreis (450), der selektiv das kapazitive Speicherelement (C₃, C₄) an den Ausgangsanschluss (403) koppelt.

15. Ein Leistungswandler gemäß Anspruch 14:
wobei die Speicherschaltung erste und zweite Speicherbusse aufweist;
wobei das kapazitive Speicherelement (C₃, C₄) jeweilige erste und zweite Kondensatoren beinhaltet, die entsprechende der ersten und zweiten Speicherbusse an den neutralen Bus (N) koppeln; und
wobei der vierte Umschaltschaltkreis das Folgende aufweist:
einen ersten Schalter betriebsfähig, um den ersten Speicherbus an den Ausgangsanschluss an- bzw. abzukoppeln; und
einen zweiten Schalter betriebsfähig, um den zweiten Speicherbus an den Ausgangsanschluss an- bzw. abzukoppeln.

16. Ein Verfahren zum Generieren bzw. Erzeugen einer AC-Ausgangswechselspannung bei einer Last (20) von einer DC-Eingangsspannung, die von einer DC-Leistungsquelle bzw. Stromquelle produziert wird, wobei das Verfahren die folgenden Schritte aufweist:
Koppeln eines ersten Anschlusses (401a) der DC-Gleichstromquelle an einen ersten Spannungsbus (402a) oder einen zweiten Spannungsbus (402b);
selektives Koppeln eines zweiten Anschlusses (401 b) der DC-Gleichstromquelle an den ersten Spannungsbus (402a) und an einen zweiten Spannungsbus (402b) über eine erste Induktivität (L₁);
Koppeln eines ersten Anschlusses einer Last (20) an einen neutralen Bus (N);
selektives Koppeln der ersten und zweiten Spannungsbusse (402a, 402b) an einen zweiten Anschluss der Last (20) über eine zweite Induktivität (L₂); und
selektives Koppeln der ersten und zweiten Spannungsbusse (402a, 402b) an den neutralen Bus (N) über eine dritte Induktivität (L₃).

17. Ein Verfahren gemäß Anspruch 16:
wobei der Schritt des selektiven Koppelns eines zweiten Anschlusses (401 b) der DC-Gleichstromquelle an den ersten Spannungsbus (402a) und eines zweiten Spannungsbusses (402b) den Schritt des selektiven Koppelns des entsprechenden der ersten und zweiten Spannungsbusse (402a, 402b) an die DC-Gleichstromquelle über entsprechende erste und zweite Schalter (411, 412) aufweist;
wobei der Schritt des selektiven Koppelns der ersten und zweiten Spannungsbusse (402a, 402b) an einen zweiten Anschluss der Last (20) den Schritt des selektiven Koppelns des entsprechenden der ersten und zweiten Spannungsbusse (402a, 402b) an den zweiten Anschluss der Last (20) über entsprechende dritte und vierte Schalter (421, 422) aufweist; und
wobei der Schritt des selektiven Koppelns der ersten und zweiten Spannungsbusse (402a, 402b) an den neutralen Bus (N) den Schritt des selektiven Koppelns der entsprechenden der ersten und zweiten Spannungsbusse (402a, 402b) an den neutralen Bus (N) über entsprechende fünfte und sechste Schalter (431, 432) aufweist.

18. Ein Verfahren gemäß Anspruch 16, das den Schritt des alternierenden Referenzierens der ersten und zweiten Anschlüsse (401 a, 401 b) der DC-Gleichstromquelle an den neutralen Bus (N) für aufeinander folgende erste und zweite Halbzyklen der AC-Ausgangswechselspannung aufweist.

19. Ein Verfahren gemäß Anspruch 16, das weiterhin die folgenden Schritte aufweist:
selektives Koppeln der ersten und zweiten Spannungsbusse (402a, 402b) an wenigstens einen des zweiten Anschlusses der Last (20) und
dem neutralen Bus (N), um die AC-Ausgangswechselspannung für einen ersten Teil eines ersten Halbzyklus der AC-Ausgangswechselspannung zu regulieren, für die der Betrag der AC-Ausgangswechselspannung kleiner als der Betrag der DC-Eingangsgleichspannung ist; und
selektives Koppeln der ersten und zweiten Spannungsbusse (402a, 402b) an den zweiten Anschluss (401 b) der DC-Gleichstromquelle, um die AC-Ausgangswechselspannung für einen zweiten Teil des ersten Halbzyklus der AC-Ausgangswechselspannung zu regulieren, für die der Betrag der AC-Ausgangswechselspannung größer als der Betrag der DC-Eingangsgleichspannung ist.

20. Ein Verfahren gemäß Anspruch 17, das weiterhin die folgenden Schritte aufweist:
selektives Koppeln der ersten und zweiten Spannungsbusse (402a, 402b) an den zweiten Anschluss der Last (20) über die dritten und vierten Schalter (421, 422) oder an den neutralen Bus (N) über die fünften und sechsten Schalter (431, 432), um die AC-Ausgangswechselspannung für einen ersten Teil eines ersten Halbzyklus der AC-Ausgangswechselspannung zu regulieren, für die der Betrag der AC-Ausgangswechselspannung kleiner als der Betrag der DC-Eingangsgleichspannung ist; und
selektives Koppeln der ersten und zweiten Spannungsbusse (402a, 402b) an den zweiten Anschluss (401 b) der DC-Gleichstromquelle über die ersten und zweiten Schalter (411, 412), um die AC-Ausgangswechselspannung für einen zweiten Teil des ersten Halbzyklus der AC-Ausgangswechselspannung zu regulieren, für den der Betrag der AC-Ausgangswechselspannung größer als der Betrag der DC-Eingangsgleichspannung ist.

21. Ein Verfahren gemäß Anspruch 19, wobei der erste Halbzyklus der AC-Ausgangswechselspannung einen positiven ersten Halbzyklus der AC-Ausgangswechselspannung aufweist, und wobei das Verfahren weiterhin die folgenden Schritte aufweist:
selektives Koppeln der ersten und zweiten Spannungsbusse (402a, 402b) an den zweiten Anschluss der Last (20) und/oder den neutralen Bus (N), um die AC-Ausgangswechselspannung eines ersten Teils eines negativen zweiten Halbzyklus der AC-Ausgangswechselspannung zu regulieren, für den der Betrag der AC-Ausgangswechselspannung kleiner als der Betrag der DC-Eingangsgleichspannung ist; und
selektives Koppeln der ersten und zweiten Spannungsbusse (402a, 402b) an den zweiten Anschluss (401 b) der DC-Gleichstromquelle, um die AC-Ausgangswechselspannung für einen zweiten Teil des negativen zweiten Halbzyklus der AC-Ausgangswechselspannung zu regulieren, für den der Betrag der AC-Ausgangswechselspannung größer als der Betrag der DC-Eingangsgleichspannung ist.

22. Ein Verfahren gemäß Anspruch 20, wobei der erste Halbzyklus der AC-Ausgangswechselspannung einen positiven ersten Halbzyklus der AC-Ausgangswechselspannung aufweist, und wobei das Verfahren weiterhin die folgenden Schritte aufweist:
selektives Koppeln der ersten und zweiten Spannungsbusse (402a, 402b) an den zweiten Anschluss der Last (20) über dritte und vierte Schalter (421, 422) oder an den neutralen Bus (N) über fünfte und sechste Schalter (431, 432), um die AC-Ausgangswechselspannung für einen ersten Teil eines negativen zweiten Halbzyklus der AC-Ausgangswechselspannung zu regulieren, für die der Betrag der AC-Ausgangswechselspannung weniger als der Betrag der DC-Eingangsgleichspannung ist; und
selektives Koppeln der ersten und zweiten Spannungsbusse (402a, 402b) an den zweiten Anschluss (401 b) der DC-Gleichstromquelle über erste und zweite Schalter (411, 412), um die AC-Ausgangswechselspannung für einen zweiten Teil des negativen zweiten Halbzyklus der AC-Ausgangswechselspannung zu regulieren, für die der Betrag der AC-Ausgangswechselspannung größer als der Betrag der DC-Eingangsgleichspannung ist.

23. Ein Verfahren gemäß Anspruch 16, wobei die DC-Gleichstromquelle eine Batterie ist.

24. Ein Verfahren gemäß Anspruch 16, das weiterhin die folgenden Schritte aufweist:
Gleichrichtendes Koppeln eines kapazitiven Speicherelements (C₃, C₄) an den zweiten Anschluss der Last (20), um eine DC-Gleichspannung über das kapazitive Speicherelement (C₃, C₄) von der AC-Ausgangswechselspannung beim zweiten Anschluss der Last (20) zu produzieren; und
selektives Koppeln des kapazitiven Speicherelements (C₃, C₄) an den zweiten Anschluss der Last (20) über einen Umschaltschaltkreis, um Strom zwischen dem kapazitiven Speicherelement (C₃, C₄) an die Last (20) zu transferieren.

## Revendications

1. Convertisseur de puissance, comprenant :
des premier et deuxième bus de tension (402a, 402b);
un premier port d'entrée disposant des première et
deuxième bornes (401a, 401b), la première borne (401a) couplée à l'un parmi les premier et deuxième bus de tension (402a, 402b) ;
un bus neutre (N) ;
une borne de sortie (403) ;
une première inductance (L₁) ;
une deuxième inductance (L₂) ;
une troisième inductance (L₃) ;
un premier circuit de commutation (410) destiné à coupler sélectivement la deuxième borne (401b) du premier port d'entrée aux premier et deuxième bus de tension (402a, 402b) par l'intermédiaire de la première inductance (L₁) ;
un deuxième circuit de commutation (420) destiné à coupler sélectivement les premier et deuxième bus de tension (402a, 402b) à la borne de sortie (403) par l'intermédiaire de la deuxième inductance (L₂) ; et
un troisième circuit de commutation (430) destiné à coupler sélectivement les premier et deuxième bus de tension (402a, 402b) au bus neutre (N) par l'intermédiaire de la troisième inductance (L₃).

2. Convertisseur de puissance selon la revendication 1, dans lequel les premier, deuxième et troisième circuits de commutation (410, 420, 430) sont destinés à produire une tension de sortie CA à la borne de sortie (403) à partir d'une tension d'entrée CC au premier port d'entrée de sorte qu'alternativement une parmi les première et deuxième bornes du premier port d'entrée soit référencée au bus neutre (N) pour des premier et deuxième demi-cycles successifs de la tension de sortie CA.

3. Convertisseur de puissance selon la revendication 2, dans lequel les premier, deuxième et troisième circuits de commutation (410, 420, 430) sont destinés à produire la tension de sortie CA à la borne de sortie (403) à partir d'une tension d'entrée CC au premier port d'entrée de telle sorte que :
au moins l'un parmi les deuxième circuit de commutation (420) et troisième circuit de commutation (430) régule la tension de sortie CA pour une première partie d'un premier demi-cycle de la tension de sortie CA ; et
le premier circuit de commutation (410) régule la 3. tension de sortie CA pour une deuxième partie du premier demi-cycle de la tension de sortie CA.

4. Convertisseur de puissance selon la revendication 3 :
dans lequel la première partie du premier demi-cycle de la tension de sortie CA comprend une partie du premier demi-cycle de la tension de sortie CA pour laquelle l'amplitude de la tension de sortie CA est inférieure à l'amplitude de la tension d'entrée CC ; et
dans lequel la deuxième partie du premier demi-cycle de la tension de sortie CA comprend une partie du premier demi-cycle de la tension de sortie CA pour laquelle l'amplitude de la tension de sortie CA est supérieure à l'amplitude de la tension d'entrée CC.

5. Convertisseur de puissance selon la revendication 3, dans lequel le premier demi-cycle comprend un demi-cycle positif de la tension de sortie CA, et dans lequel les premier, deuxième et troisième circuits de commutation (410, 420, 430) sont en outre destinés à produire la tension de sortie CA à la borne de sortie à partir de la tension d'entrée CC au premier port d'entrée de telle sorte que :
au moins l'un parmi les deuxième circuit de commutation (420) et troisième circuit de commutation (430) régule la tension de sortie CA pour une première partie d'un deuxième demi-cycle négatif de la tension de sortie CA ; et
le premier circuit de commutation (410) régule la tension de sortie CA pour une deuxième partie du deuxième demi-cycle négatif de la tension de sortie CA.

6. Convertisseur de puissance selon la revendication 5 :
dans lequel la première partie du deuxième demi-cycle négatif de la tension de sortie CA comprend une partie du deuxième demi-cycle négatif de la tension de sortie CA pour laquelle l'amplitude de la tension de sortie CA est inférieure à l'amplitude de la tension d'entrée CC ; et
dans lequel la deuxième partie du deuxième demi-cycle négatif de la tension de sortie CA comprend une partie du deuxième demi-cycle de la tension de sortie CA pour laquelle l'amplitude de la tension de sortie CA est supérieure à l'amplitude de la tension d'entrée CC.

7. Convertisseur de puissance selon la revendication 1 :
dans lequel la première inductance (L₁) comprend les première et deuxième bornes, la première borne de la première inductance étant couplée à la deuxième borne du premier port d'entrée ;
dans lequel le premier circuit de commutation (410) comprend :
un premier commutateur (411) destiné à coupler et à découpler la deuxième borne de la première inductance (L₁) et le premier bus de tension (402a) ; et
un deuxième commutateur (412) destiné à coupler et à découpler la deuxième borne de la première inductance (L₁) et le deuxième bus de tension (402b) ;
dans lequel la deuxième inductance (L₂) comprend les première et deuxième bornes, la première borne de la deuxième inductance (L₂) étant couplée à la borne de sortie (403) ;
dans lequel le deuxième circuit de commutation (420) comprend :
un troisième commutateur (421) destiné à coupler et à découpler la deuxième borne de la deuxième inductance (L₂) et le premier bus de tension (402a) ; et
un quatrième commutateur (422) destiné à coupler et à découpler la deuxième borne de la deuxième inductance (L₂) et le deuxième bus de tension (402b) ; et
dans lequel la troisième inductance (L₃) comprend les première et deuxième bornes, la première borne de la troisième inductance (L₃) étant connectée au bus neutre (N) ;
dans lequel le troisième circuit de commutation (430) comprend :
un cinquième commutateur (431) destiné à coupler et à découpler la deuxième borne de la troisième inductance (L₃) et le premier bus de tension (402a) ; et
un sixième commutateur (432) destiné à coupler et à découpler la deuxième borne de la troisième inductance (L₃) et le deuxième bus de tension (402b).

8. Convertisseur de puissance selon la revendication 7,
dans lequel les premier et deuxième commutateurs (411, 412) fonctionnent de manière sensiblement complémentaire,
dans lequel les troisième et quatrième commutateurs (421, 422) fonctionnent de manière sensiblement complémentaire, et
dans lequel les cinquième et sixième commutateurs (431, 432) fonctionnent de manière sensiblement complémentaire.

9. Convertisseur de puissance selon la revendication 7, comprenant en outre un septième commutateur (441) destiné à coupler et à découpler la première borne de la première inductance (L₁) à la deuxième borne (401b) du premier port d'entrée.

10. Convertisseur de puissance selon la revendication 9, comprenant en outre une batterie connectée aux première et deuxième bornes (401a, 401b) du premier port d'entrée.

11. Convertisseur de puissance selon la revendication 1, comprenant en outre : un deuxième port d'entrée ; et un quatrième circuit de commutation (441, 442) destiné à :
coupler la deuxième borne (401b) du premier port d'entrée au deuxième bus de tension (402b), découpler la deuxième borne (401b) du premier port d'entrée à partir du premier circuit de commutation (410), et coupler le premier circuit de commutation (410) à une première borne (401c) du deuxième port d'entrée, simultanément dans un premier mode ; et à
coupler la deuxième borne (401b) du premier port d'entrée au premier circuit de commutation (410), découpler la deuxième borne (401b) du premier port d'entrée à partir du deuxième bus de tension (402b), et découpler la première borne (401c) du deuxième port d'entrée à partir du premier circuit de commutation (410), simultanément dans un deuxième mode.

12. Convertisseur de puissance selon la revendication 11, dans lequel les premier, deuxième et troisième circuits de commutation (410, 420, 430) sont destinés à générer une tension CC aux premier et deuxième bus de tension (402a, 402b) à partir d'une tension CA au deuxième port d'entrée.

13. Convertisseur de puissance selon la revendication 12, dans lequel les premier, deuxième et troisième circuits de commutation (410, 420, 430) sont destinés à générer une tension CC aux premier et deuxième bus de tension (402a, 402b) dans le premier mode qui est suffisant pour entraîner le transfert de la puissance des premier et deuxième bus de tension (402a, 402b) au premier port d'entrée.

14. Convertisseur de puissance selon la revendication 1, comprenant en outre un circuit de stockage couplé à la borne de sortie, le circuit de stockage comprenant :
un élément de stockage capacitif (C₃, C₄) ;
un circuit de redressement (D₃, D₄) qui couple en redressant l'élément de stockage capacitif (C₃, C₄) à la borne de sortie (403) afin de produire une tension CC à l'élément de stockage capacitif (C₃, C₄) à partir d'une tension de sortie CA à la borne de sortie (403) ; et
un quatrième circuit de commutation (450) qui couple sélectivement l'élément de stockage capacitif (C₃, C₄) à la borne de sortie (403).

15. Convertisseur de puissance selon la revendication 14 :
dans lequel le circuit de stockage comprend les premier et deuxième bus de stockage ; dans lequel l'élément de stockage capacitif (C₃, C₄) comprend les premier et deuxième condensateurs respectifs couplant les premier et deuxième bus de stockage respectifs au bus neutre (N) ; et
dans lequel le quatrième circuit de commutation comprend :
un premier commutateur destiné à coupler et à découpler le premier bus de stockage et la borne de sortie ; et
un deuxième commutateur destiné à coupler et à découpler le deuxième bus de stockage et la borne de sortie.

16. Procédé destiné à générer une tension de sortie CA à une charge (20) à partir d'une tension d'entrée CC produite par une source de puissance CC, le procédé comprenant les étapes consistant à :
coupler une première borne (401a) de la source de puissance CC à l'un parmi un premier bus de tension (402a) et un deuxième bus de tension (402b) ;
coupler sélectivement une deuxième borne (401b) de la source de puissance CC au premier bus de tension (402a) et un deuxième bus de tension (402b) par l'intermédiaire d'une première inductance (L₁) ;
coupler une première borne d'une charge (20) à un bus neutre (N) ;
coupler sélectivement les premier et deuxième bus de tension (402a, 402b) à une deuxième borne de la charge (20) par l'intermédiaire d'une deuxième inductance (L₂) ; et à
coupler sélectivement les premier et deuxième bus de tension (402a, 402b) au bus neutre (N) par l'intermédiaire d'une troisième inductance (L₃).

17. Procédé selon la revendication 16 :
dans lequel ladite étape consistant à coupler sélectivement une deuxième borne (401b) de la source de puissance CC au premier bus de tension (402a) et à un deuxième bus de tension (402b) comprend l'étape consistant à coupler sélectivement les premier et deuxième bus de tension (402a, 402b) respectifs à la source de puissance CC par l'intermédiaire des premier et deuxième commutateurs (411, 412) respectifs ;
dans lequel ladite étape consistant à coupler sélectivement les premier et deuxième bus de tension (402a, 402b) à une deuxième borne de la charge (20) comprend l'étape consistant à coupler sélectivement les premier et deuxième bus de tension (402a, 402b) respectifs à la deuxième borne de la charge (20) par l'intermédiaire des troisième et quatrième commutateurs (421, 422) respectifs ; et
dans lequel ladite étape consistant à coupler sélectivement les premier et deuxième bus de tension (402a, 402b) au bus neutre (N) comprend l'étape consistant à coupler sélectivement les premier et deuxième bus de tension (402a, 402b) respectifs au bus neutre (N) par l'intermédiaire des cinquième et sixième commutateurs (431, 432) respectifs.

18. Procédé selon la revendication 16, comprenant l'étape consistant à référencer alternativement les première et deuxième bornes (401a, 401b) de la source de puissance CC au bus neutre (N) pour les premier et deuxième demi-cycles successifs de la tension de sortie CA.

19. Procédé selon la revendication 16, comprenant en outre les étapes consistant à :
coupler sélectivement les premier et deuxième bus de tension (402a, 402b) à au moins l'un parmi la deuxième borne de la charge (20) et le bus neutre (N) afin de réguler la tension de sortie CA pour une première partie d'un premier demi-cycle de la tension de sortie CA pour laquelle l'amplitude de la tension de sortie CA est inférieure à l'amplitude de la tension d'entrée CC ; et à
coupler sélectivement les premier et deuxième bus de tension (402a, 402b) à la deuxième borne (401b) de la source de puissance CC afin de réguler la tension de sortie CA pour une deuxième partie du premier demi-cycle de la tension de sortie CA pour laquelle l'amplitude de la tension de sortie CA est supérieure à l'amplitude de la tension d'entrée CC.

20. Procédé selon la revendication 17, comprenant en outre les étapes consistant à :
coupler sélectivement les premier et deuxième bus de tension (402a, 402b) à la deuxième borne de la charge (20) par l'intermédiaire des troisième et quatrième commutateurs (421, 422) ou au bus neutre (N) par l'intermédiaire des cinquième et sixième commutateurs (431, 432) afin de réguler la tension de sortie CA pour une première partie d'un premier demi-cycle de la tension de sortie CA pour laquelle l'amplitude de la tension de sortie CA est inférieure à l'amplitude de la tension d'entrée CC ; et à
coupler sélectivement les premier et deuxième bus de tension (402a, 402b) à la deuxième borne (401b) de la source de puissance CC par l'intermédiaire des premier et deuxième commutateurs (411, 412) afin de réguler la tension de sortie CA pour une deuxième partie du premier demi-cycle de la tension de sortie CA pour laquelle l'amplitude de la tension de sortie CA est supérieure à l'amplitude de la tension d'entrée CC.

21. Procédé selon la revendication 19, dans lequel le premier demi-cycle de la tension de sortie CA comprend un premier demi-cycle positif de la tension de sortie CA, et dans lequel le procédé comprend en outre les étapes consistant à :
coupler sélectivement les premier et deuxième bus de tension (402a, 402b) à au moins l'un parmi la deuxième borne de la charge (20) et le bus neutre (N) afin de réguler la tension de sortie CA pour une première partie d'un deuxième demi-cycle négatif de la tension de sortie CA pour laquelle l'amplitude de la tension de sortie CA est inférieure à l'amplitude de la tension d'entrée CC ; et à
coupler sélectivement les premier et deuxième bus de tension (402a, 402b) à la deuxième borne (401b) de la source de puissance CC afin de réguler la tension de sortie CA pour une deuxième partie du deuxième demi-cycle négatif de la tension de sortie CA pour laquelle l'amplitude de la tension de sortie CA est supérieure à l'amplitude de la tension d'entrée CC.

22. Procédé selon la revendication 20, dans lequel le premier demi-cycle de la tension de sortie CA comprend un premier demi-cycle positif de la tension de sortie CA, et dans lequel le procédé comprend en outre les étapes consistant à :
coupler sélectivement les premier et deuxième bus de tension (402a, 402b) à la deuxième borne de la charge (20) par l'intermédiaire des troisième et quatrième commutateurs (421, 422) ou au bus neutre (N) par l'intermédiaire des cinquième et sixième commutateurs (431, 432) afin de réguler la tension de sortie CA pour une première partie d'un deuxième demi-cycle négatif de la tension de sortie CA pour laquelle l'amplitude de la tension de sortie CA est inférieure à l'amplitude de la tension d'entrée CC ; et à
coupler sélectivement les premier et deuxième bus de tension (402a, 402b) à la deuxième borne (401b) de la source de puissance CC par l'intermédiaire des premier et deuxième commutateurs (411, 412) afin de réguler la tension de sortie CA pour une deuxième partie du deuxième demi-cycle négatif de la tension de sortie CA pour laquelle l'amplitude de la tension de sortie CA est supérieure à l'amplitude de la tension d'entrée CC.

23. Procédé selon la revendication 16, dans lequel la source de puissance CC est une batterie.

24. Procédé selon la revendication 16, comprenant en outre les étapes consistant à :
coupler en redressant un élément de stockage capacitif (C₃, C₄) à la deuxième borne de la charge (20) afin de produire une tension CC à l'élément de stockage capacitif (C₃, C₄) à partir de la tension de sortie CA à la deuxième borne de la charge (20) ; et à
coupler sélectivement l'élément de stockage capacitif (C₃, C₄) à la deuxième borne de la charge (20) par l'intermédiaire d'un circuit de commutation afin de transférer la puissance entre les éléments de stockage capacitifs (C₃, C₄) à la charge (20).
